(19) Europäisches Patentamt
European Patent Office
Office européen des brevets

(11) Publication number: **0 409 425 A2**

(12) **EUROPEAN PATENT APPLICATION**

(21) Application number: **90306992.0**

(51) Int. Cl.$^5$: **G06F 15/38**

(22) Date of filing: **26.06.90**

A request for addition Fig. 4A has been filed pursuant to Rule 88 EPC. A decision on the request will be taken during the proceedings before the Examining Division (Guidelines for Examination in the EPO, A-V, 2.2).

(30) Priority: **15.07.89 KR 10080**
**07.10.89 KR 14447**

(43) Date of publication of application:
**23.01.91 Bulletin 91/04**

(84) Designated Contracting States:
**DE FR GB IT NL**

(71) Applicant: **Kim, Keechung**
**696-12 Simgok-dong, Nam-ku**
**Bucheon-city, Kyunggi-do(KR)**

Applicant: **Kim, Sunchang**
**696-12 Simgok-dong, Nam-ku**
**Bucheon-city, Kyunggi-do(KR)**

(72) Inventor: **Kim, Keechung**
**696-12 Simgok-dong, Nam-ku**
**Bucheon-city, Kyunggi-do(KR)**
Inventor: **Kim, Sunchang**
**696-12 Simgok-dong, Nam-ku**
**Bucheon-city, Kyunggi-do(KR)**

(74) Representative: **Kensett, John Hinton et al**
**Saunders & Dolleymore, 9 Rickmansworth Roadoad**
**Watford, Hertfordshire WD1 7HE(GB)**

(54) **Method and apparatus for translating language.**

(57) A method for processing natural language comprises the steps of alternating words constructing a sentence of a natural language into computing units made up of the Speech Element by each of Parts of Speech which are absolutely necessary and selected for analyzing and processing a natural language, and then computing analysis values among Speech Elements having information of character classification, means of Parts of Speech, grammatical relation, and functions in sense or by use which words have. A machine translation system implementing the method comprises input means, dictionary means, reading-dictionary memory means, original sentence memory means, computing unit memory means, analysis value memory means, translated sentence memory part, output means, and a CPU for controlling each of the said means.

FIG.1

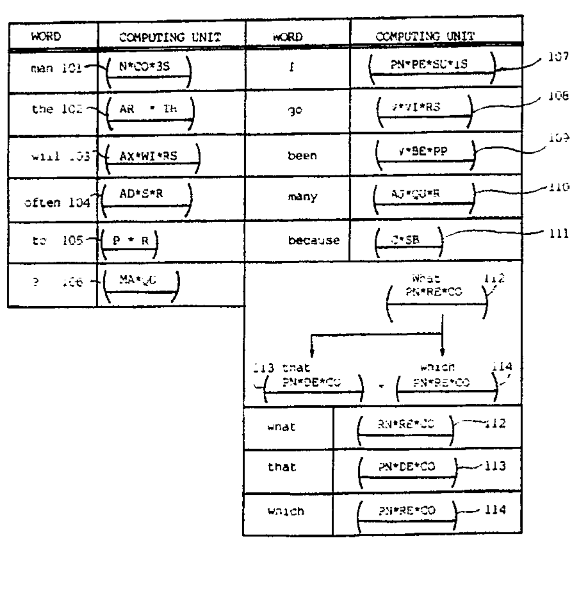


EP 0 409 425 A2

# METHOD AND APPARATUS FOR TRANSLATING LANGUAGE

This invention relates to a method for analyzing and processing a natural language (hereinafter, this will be called "first language") and to an apparatus or machine translation system which can translate a first language into another desired natural language (a second language) by means of this method.

Methods for analyzing and processing natural languages are generally characterized as a Direct method, Transfer method, and Pivot method.

A Direct method is a method in which words or phrases of a natural language are substituted directly with corresponding words or phrases of a second language, and the word order of the translation is re-arranged appropriately.

In effect, natural language processing is rarely performed by this method.

A Transfer method is one which involves interpreting a sentence of a first language and, after analyzing its internal structure, converting the internal structure into an internal structure in a second language. This method cannot perform fully semantic interpretation of a sentence in a natural language, by performing partial natural language processing.

A Pivot method is a system based on the supposition that there is an universal concept in all languages, regardless of the many languages used on earth, for converting a first language into semantic expression (a neutral language) based on the universal concept and re-translating the expression into a second language.

It should be noted that the Pivot method is considered difficult to execute in the theory which has been developed to date. The reason is that it is difficult to conjecture what expressions will be neutral language and how a contextual interpretation will be performed. The applicants have concluded, that this is because the prior research on this method is incomplete as yet. Therefore, the conventional methods for processing natural language remain at the level of the Transfer method.

Accordingly, the present inventors came to study a new method for processing natural language in comparison with the conventional methods for processing natural language having the shortcomings and problems described above.

As representative examples of conventional translation systems; European Patent Application No. 87 106512.4 proposes a machine translation system for translating a first language having no morphological distinction between singular form and plural form into a second language having a morphological distinction between the two. The system comprises input means for inputting an original sentence in the first language, dictionary means for storing various information about the first language and between the first and second languages, translation means for translating an original sentence in the first language into a translated sentence in the second language on the basis of information stored in the dictionary means, and output means for outputting the translated sentence in the second language. The invention is further characterized in that the dictionary means comprises semantic information indicative of plural number, and said translation means syntactically and semantically translates the first language into the second language on the basis of syntactical modification relationship between a first category having a morphological distinction between singular and plural forms and a second category including semantic information indicative of the plural number.

In addition, European Patent Application No 87 300007.9 proposes a machine translation system which can utilize translation information obtained in part of the translation processing even when translation processing is interrupted, can eliminate wasteful translation processing, and can improve translation processing efficiency; European Patent Application No. 87 102681.1 proposes a machine translation system in which translated sentences of good quality can be obtained rapidly by the effective use of information contained in both general purpose ana nomenclature dictionaries, comprising input means having function keys, edit keys, cursor keys for entry of the original written in the first language and for performing various operations for translaton, as well as having other alphanumeric keys; a first memory for song original sentences written in the first language so as to analyze the original sentences; a second memory for storing the translated sentences in the second language as a translation corresponding to the input in the first language; edit control means for controlling the edition operation of the entire system; translation means coupled to the edit control means for executing the translation processing in accordance with control signals from the edit control means; dictionary means having at least a first dictionary for storing various words in various Parts of Speech and their translation in the second language respectively corresponding to the words in the first language, and a second dictionary for storing various terminology in Nouns in the second language corresponding to the words in the first language, as well as storing grammar for the analysis of the first and second languages; and display means having display control means, for displaying both the original sentences and the translated sentences on the display surface.

European Patent Application No. 87 106706.2 proposes a machine translation system for translating a first language into a second language, which comprises: an input portion having function keys, edit keys, cursor keys for entry of the original written sentences in the first language and for performing various operations for translation, as well as having other alphanumeric keys; a first memory for storing original sentences written in the first languages so as to analyze the original sentences;

a second memory for storing translated sentences in the second language as a translation corresponding to the input original sentences in the first language;

an edit control portion for controlling the edition operation of the entire system; dictionary means having a first dictionary in accordance with which the inserted comments are extracted and analyzed and a second dictionary in accordance with which the other portion of the sentences than the inserted comments is analyzed, the first dictionary including an inserted comment extracting rule in accordance with which the inserted comments are extracted and an inserted comment analysis grammar in accordance with which the inserted comments which are extracted are analyzed;

a translation portion coupled to said edit control portion for executing the translation processing in accordance with control signals from said edit control means such that the inserted comments are extracted in accordance with the inserted comment extracting rule, the inserted comments which are extracted, are analyzed in accordance with the inserted comment analysis grammer, the other portion is analyzed, and an analysis of the inserted comment and an analysis of the other portion are combined to obtain an analysis of the overall sentences; display having display control portion, for producing translated sentences in the second language in accordance with the analysis of the sentences obtained by said translation portion so as to display the inserted comments translated to the second language in a distinguishable manner. The display control portion is constructed to add a symbol designating the inserted comment to each of the translated inserted comment and to display the translated sentences including the inserted comment with the symbol. International Application published under the Patent Cooperation Treaty No. PCT/GB 87/00683 proposes a translation system for translating phrases from a first language into a second language, comprising: a store holding a collection of phrases in the second language; input means to accept of phrase in the first language; output means to cut put in the second language a phrase comprising one from said collection of phrases; characterization means to determine which of said collection of phrases corresponds to said input phrase; and means responsive to said characterization means to control the output means ana to ensure the outputting of the phrase from said collection which corresponds to the input phrase.

A translation system generally adopts the the Direct Method, Transfer method or Pivot method as its method for translation.

The aforesaid Direct method, which was used in the early stage in the machine translation, has been usually adopted in order to develop systems for translating Japanese into Korean and Korean into Japanese which are included in the same language family. This method had been selected, since translation can be performed just by inputting dictionaries of the languages related to translation into the computer and exchanging corresponding words between languages. It is not suitable for translating languages which belong to different language families.

Secondly, a Transfer method (conversion method) which lets words correspond to those n second language and their mutual internal structures correspond to those in second language as well is better than Direct method in the quality of translation.

This method is suitable for translation between languages which are of similar language families, and the "SYSTRAN" (System Translation) developed by the use of this method in Europe is representative. Considerable research has been carried out on a computer translation system in Korea, and the tree structure interpreting method by the transformational grammer is an example. Nevertheless, this method is also not appropriate for translation between languages which are of different language families.

As previously stated, research on the Pivot method has not been sufficiently completed to be selected for the development of a machine translation system. Therefore, in most of the former machine translation system, a generating theory if transformational grammar restricted to machine translation had been applied, and by using this system a first language can be translated into only one second language at a time and its translating efficiency remains at seventy percent, requiring direct user post-editing with commensurate time and trouble.

Since appropriate analysis and processing on the natural language do not precede translation in the above machine translation systems, semantic interpretation on an input original sentence can not be performed in full and an input first language cannot be simultaneously translated into several second languages.

A generating theory of transformational grammer used in the aforesaid conventional machine translation system, which is the already well known transfer method, had the disadvantages of, for example, poor translation efficiency and an inability to fully translate and process a first language in the state of natural language, and therefore machine translation systems using the theory could not overcome problems in the methods themselves.

Accordingly, the present inventors selected the method for processing natural language according to the present invention which has been studied since the 1970's in order to develop a machine translation system which can carry out accurate semantic interpretation on input original sentences and simultaneous multilingual translation, without setting limit of the objects of second language to only one, and which has no need for users to do anything but a translation introduction, and which can heighten the translation efficiency to more than ninety percent, through the development of this method for processing natural language of a first language in order to get rid of defects and problems in the former machine translation systems.

According to the present invention, there is provided a method for processing natural language; which method comprises the steps of transforming words forming a sentence of a natural language into computing units made up of Speech Elements containing parts of speech which are selected for analyzing and processing a natural language, and then computing analysis values among Speech Elements having information concerning character classification, meanings of carts of Speech, grammatical relation, and functions in sense or of words; computing structure formulae which express a sentence in a natural language as a set of computing units; computing an analysis value having information of natural language processing through a processing sequence by the use of an interpreting method of mutual function among data, comprising analyzing the grammatical relation and function in sentence structure between selected computing units ang including; a first main clause processing sequence for interpreting the relationship of Parts of Speech between a subject word in a main clause and its predicate verb forming a processing sentence of the natural language; a second main clause processing sequence for interpreting the tense and voice of a predicate verb and the function of the main verb combining with the subject word; a first verbal construction processing sequence for interpreting the relationship of Parts of Speech between a sense subject word and verbal construction; a second verbal construction processing sequence for interpreting the tense, voice and function of the verbal combining with the sense subject word in the verbal construction; a first subordinate clause processing sequence for interpreting the relationship of Parts of Speech between the subject word and the first predicate verb; and a second subordinate clause processing sequence for interpreting tense and voice of the predicate verb and function of the main verb; and storing analysis values computed by means of the said interpreting method of mutual function among data.

An embodiment of the present invention analyzes words forming a sentence for the natural language processing, and then transforms them into computing units as processing units. Then, by using computing units, analysis values containing information on all the natural language processing procedures are computed through a processing sequence for analyzing and processing a sentence into a corresponding one while leaving the natural language intact. Lastly, the computed analysis values are stored in memory units. These memory units are utilized initially for a machine translation system which is a first desired use and can be used as the basic data in a knowledge base for artificial intelligence as well.

The computing unit may correspond to one word, and may be also comprised of a plurality of computing units. The computing units in the latter case are referred to as a united computing unit.

A computing unit is the basic element of the invention. A computing unit is selected to be the minimum necessary definition among Speech Elements having information of character classification, meanings of Parts of Speech, and grammatical relations. The computing unit functions in the sense or by the use which words have (in context) for analyzing and processing a natural language, and then computing analysis values.

Moreover, the processing sequence which computes the Analysis Values by processing a sentence of natural language is subdivided into as follows;

a first main clause sequence for interpreting the construct relation of Parts of Speech between a subject word in the main clause and its predicate verb forming a processing sentence of the natural language; a second main clause sequence for interpreting tense and voice of predicate verb and function of main verb combining with the subject word;

a first verbal construction sequence for interpreting the construct relation of Parts of Speech between a sense subject word and a verbal forming a verbal construction; a second verbal construction sequence for interpreting tense, voice, and function of the verbal combining with the sense subject word in the verbal construction; and

a first subordinate clause sequence for interpreting the construct relation of Parts of Speech between a subject word and a first predicate verb constructing a subordinate clause, and a second subordinate clause sequence for interpreting tense and voice of the predicate verb combining with the subject word and function of the main verb.

According to the present invention there is further provided a translation system comprising: input means for inputting a translating language; dictionary means for storing computing units for the translating language, analysis values desired translated words of a natural language according to an analysis value; reading-dictionary memory means for reading out computing units corresponding to an input original sentence, Speech Elements, analysis values, and desired translated words of the natural language out of the said dictionary means, and for storing them during a translation processing sequence; original sentence memory means for storing the input original sentence; computing unit memory means for reading out computing units of the original sentence being translated out of the said reading-dictionary memory means and storing them; analysis value memory means for storing the analysis values computed by means of analysis of a grammatical relation and sentence structure of the said stored computing units; translated sentence memory means for storing the translated sentence; output means for outputting translation information stored in the said translated sentence memory part; and a processing means for controlling each of the said means.

A machine translation system using the above method according to the present invention has an essential memory means, that is a "dictionary".

Most of the concepts described in the above summary (A) reapply to the machine translation system.

A dictionary consists of Speech Elements and computing units of Parts of Speech formed by a first language and analysis values group which is a set of analysis values placed on the denominator of memory unit, and contains translated words in a second language corresponding to these analysis values. The aforesaid dictionary is divided into a word dictionary and phrase dictionary, and these two dictionaries have similar structures to one another. Additionally, the dictionary can be divided into a common dictionary used in general and a technical one used in professional fields such as, for example, economy and biology. Analysis values stored in the dictionary agree with those computed through the processing sequence, and a translated word in the second language which users want can be generated according to an analysis value group.

The above and further objects and advantages of the present invention will be better understood from the following description, by way of example only, of one embodiment of the present invention with reference to the accompanying drawings, in which:

Fig. 1 shows computing units used in the present invention;

Fig. 2 shows a plurality of computing units corresponding to one word used in the present invention;

Fig. 3 shows the structure formulae of a sentence used in the present invention;

Fig. 4 is a flow chart of a natural language processing sequence according to the present invention;

Fig. 5 shows the natural language processing sequence of the first sequence for a main clause according to the present invention;

Fig. 6 shows the natural language processing sequence of the second sequence for a main clause according to the present invention;

Fig. 7 shows the natural language processing sequence of the first and second sequences of a subordinate clause according to the present invention;

Fig. 8 shows the natural language processing sequence of the first and second sequences of head, subordinate clause according to the present invention;

Fig. 9 shows the natural language processing sequence of verbal construction according to the present invention;

Fig. 10 shows the overall natural language processing sequence according to the present invention;

Fig. 11 shows memory units according to the present invention;

Fig. 12 shows an establishment of word memory units according to the present invention;

Fig. 13 shows an establishment of phrase memory units according to the present invention;

Fig. 14 shows an embodiment of a knowledge base according to the present invention;

Fig. 15 is a block diagram of an embodiment of the machine translation system according to the present invention;

Fig. 16 is a composite drawing of an embodiment of dictionaries according to the present invention;

Fig. 17 is an overall flow chart of an embodiment of the machine translation system according to the present invention;

Fig. 18 is a flow chart of an embodiment for looking up translated words for a phrase according to the present invention;

Fig. 19 is a flow chart of an embodiment of a word translating sequence according to the present invention;

Fig. 20(A) shows a word dictionary;

Fig. 20(B) shows illustrative sentences; and

Fig. 20(C) shows an analysis value memory part;

An embodiment of the present invention will be described in detail hereinafter with reference to the attached drawings.

English was taken as an example of a processing natural language in the present detailed description.

Fig. 1 is an illustration drawing showing the form of computing units according to the present invention.

In the drawing, "N" stands for "Noun"; "CO" stands for "Common Case"; "3S" stands for "3rd Person & Single"; "AR" stands for "Article"; "TH" stands for "the (definite article)", "AX" stands for "Auxiliary Verb"; "WI" stands for "Will"; "RS" stands for "Present Tense"; "AD" stands for "Adverb"; "S" stands for "Simple"; "R" stands for "Root Degree"; "P" stands for "Preposition"; "R" stands for "Root" (when "To" combines with a basic verb ). "MA" stands for "Mark"; "QU" stands for "Question"; "PN" stands for "Pronoun"; "PE" stands for "personal(Pronoun)"; "SU" stands for "Subjective"; "1S" stands for "1st person & Single"; "V" stands for "Verb"; "VI" stands for "Intransitive Verb"; "BE" stands for "Be-Verb"; "PP" stands for "Past Participle"; "AJ" stands for "Adjective"; "QU" stands for "Quantity"; "ER" stands for "Comparative Degree"; "C" stands for "Conjunction"; "SB" stands for "Subordinate"; "RE" stands for "Relative" and "DE" stands for "Demonstrative".

Before computing units are concretely described, Speech Elements equivalent to the major principle of the present invention will be described.

English sentences, for example, are made up of words classified by eight Parts of Speech. The Speech Elements of these words are determined by Classification by corresponding Parts of Speech, detailed Classification of Parts of Speech, Person and Number, Sex, Case, Tense, and Character Classification.

However, these Speech Elements are not equally adapted to all Parts of Speech.

Parts of Speech are divided into eight classes and each of these eight Parts of Speech plays an individual role in sentences. As the functions of words by Parts of Speech are different from each other, Speech Elements by each of Parts of Speech tied together are referred to as a computing unit. That is, a computing unit represents a word in terms of Speech Elements by Parts of Speech corresponding to it. However, a computing unit does not always require all Speech Elements by Parts of Speech to replace a word. A computing unit is made up of the Speech Elements which are absolutely necessary and selected for the natural language processing sequence of a sentence.

In order to express the computing unit, a fractional expression is applied out of mathematics. Centering on the middle line of a fractional expression, a computing unit is placed in the numerator, and an analysis value in the denominator. Then, the fractional expression is parenthesized in order to define the numerator and the denominator as a function of the Part of Speech.

Computing units by each Part of Speech will now be concretely described.

Referring now to Fig. 1, as may been seen from a computing unit (101) for "man", its denominator is currently empty. An analysis value which is to be described later will be placed on the empty denominator of the computing unit. The computing unit signifies that "man" is a noun, common case, and third person sigular.

Similarly a computing unit (102) for "the" signifies that "the" is an article and corresponds to the definite article by Detailed Classification of Parts of Speech for "articles". A computing unit (103) for "will" signifies that "will" is an auxiliary verb and corresponds to "will" by Detailed Classification of Parts of Speech (In case of "shall", "SA" is placed on it instead of "WI"), and it is in the present tense. A computing unit (104) for "often" signifies that "often" is a simple adverb and root degree.

A computing unit (105) for "to" signifies that even root forms of verbs follow "to", distinct from other simple prepositions. A computing uni (106) for "?" signifies that "?" is one of the punctuation marks and question mark by classification. A computing unit (107) for "I" shows that "I" is a personal pronoun in the subjective case and first personal singular pronoun. Each computing unit for "go" (108) and for "been" (109) shows that the former one is the present tense (RS) and the later is the past participle. "go" is, of course, an intransitive verb and "been" is equivalent to a Be-Verb (BE). A computing unit (110) for "many" displays that "many" is a quantity adjective and equivalent to a root degree. A computing unit (111) for "because" signifies that "because" is a subordinate conjunction. "QU" which looks repeated in each computing unit for "?" (106) and for "many" (110) signifies a question mark when "QU" follows "MA" (standing for a punctuation mark) while "QU" stands for a quantity when it follows "AJ", each meaning of "QU" is distinguishable from the other by association.

Being divided into more than two computing units, one computing unit may be used in the natural language processing sequence, which is referred to as a united computing unit. A computing unit (112) for "what" shows a form of the united computing unit divided into each computing unit for "that" (113) and for "which" (114). When "what" is read as "relative pronoun" (112) in the natural language processing sequence, it is divided into computing units for "deonstrative pronoun" (113) and for "relative pronoun" (114) each, and then they go through the natural language processing sequence.

Fig. 2 is an illustration drawing showing a plurality of computing units for a word according to the present invention. In the drawing, English letters used in computing units (201, 202, 203, and 204) are the same as the ones in the above Fig. 1. As an example, a procedure for replacing "that" used in the following four sentences with computing units distinct from each other and using these computing units through the processing sequence performing the natural language processing sequence according to the present invention will be described.

1) That is a book.
2) I don't remember that girl.
3) My son can't run that fast like your son.
4) I know that he is a selfish man.

When the sentence 1 is replaced with computing units through the natural language processing sequence, "that" in the sentence 1 is replaced with a computing unit I (201) corresponding to "demonstrative pronoun". In case of the sentence 2, the computing unit I (201) cannot perform the natural language processing sequence of "that", appropriately.

Therefore, "that" in the sentence 2 is replaced with a computing unit II (202) signifying a demonstrative adjective which modifies a noun. In the sentence 3, a computing unit of adverb (203) modifying "fast", and in the sentence 4, a computing unit of subordinate conjunction (204) leading a final clause are selected as each of computing units for "that".

As above, after judging the impropriety of the computing unit (201) selected in the first stage, a decision on selection of the appropriate computing units (202, 203, and 204) is made by "analyzing the grammatical relation and the function in sentence structure among selected computing units" (which will be referred to as an interpreting method of mutual function among data, hereinafter) in the processing sequence performing the natural language processing. In case of the sentence 2, a computing unit for "girl" (which is the same as the computing unit for "man") follows the computing unit for "that" (201) and "girl" cannot be properly analyzed by function of the prior computing unit I (201). Accordingly, an appropriate interpreting of mutual function among data is performed by alternating the prior computing unit I with the computing unit II(202) of "demonstrative adjective".

Fig. 3 is an illustration drawing for the contents of structure formulae according to the present invention.

In the drawing, English letters used in the computing units are the same as those mentioned above, and "MS" used in a computing unit for "am" (302) signifies Be-Verb in the present tense.

It should be noted that when the verb "am" combines with a subject word, the subject word is defined to be the first personal sigular pronoun, that is "I".

In other words, the subject word combined with "am" is nothing but, "I" by means of "MS" used in the computing unit for "am" (302).

Being contrary to "TH" used in the computing unit for "the" (102), "A" used in a computing unit for "a" (303) stands for the indefinite article and "TH", the definite one, as above-mentioned.

Structure formulae, which are necessary for the natural language processing in English, are made up of a group of computing units.

As an English sentence is made up of a group of words, sentences are converted to structure formulae by introducing computing units for Parts of Speech corresponding to words, and replacing the words with their computing units.

A sentence is practically converted into structure formulae for natural language processing, and the structure formulae are analyzed and processed by means of the interpreting method of mutual function among data through the processing sequence. "X" is used as a sign connecting two computing units which are adjacent to each other. The sign, "x" signifies that two computing units make up a mutual grammatical unifying relation like a sign "*" used in the computing unit.

Fig. 4 is a flow chart of a processing sequence according to the present invention.

A detailed processing sequence will be described in Fig. 5, and the overall sequences for analyzing and processing a sentence which is to be translated will be described in the present Fig. 4.

As previously mentioned, a processing sequence which is specially established according to the present invention in order to perform the natural language process is, to a large degree, divided as follows:
the first processing sequence for main clause (S4); the second processing sequence of main clause (S5); the first processing sequence of head, verbal construction (S7); the second processing sequence of head, verbal construction (S8); the first process sequence of head, subordinate clause (S10); the second process sequence of head, subordinate clause (S11);
the first process sequence of subordinate clause (S19) (which is also referred to as the first process sequence of middle, subordinate clause, being distinguished from the first process sequence of head, subordinate clause);

the second process sequence of subordinate clause(S20);
the first process sequence of verbal construction (S26) (which is the first process sequence of middle, verbal construction, being distinguished from the first process sequence of head, verbal construction);
the second process sequence of verbal construction (S27); the first process sequence of co-ordinate clause (S33); the second process sequence of co-ordinate clause (S34). Then, whenever each of the process sequences is implemented, a corresponding analysis value is computed. The term of "natural language processing" according to the present invention is used interchangeably with "computing process".

A sentence which undergoes the processing sequence is first divided into words or symbols, and replaced with computing units corresponding to each of the words (S2). After the structure formulae made up of computing units are formed, the natural language processing is then performed according to the present invention.

When a sentence is analyzed (S3) as one beginning with a main clause through the interpreting method of mutual function among data of computing units, the sentence computes an analysis value by means of the interpreting method of mutual function among data of computing units in the first main clause processing sequence (S4) The first main clause processing sequence is implemented, being subdivided into the first step for interpreting person and number, the second step for interpreting the subject word and first predicate verb, and the third step for analyzing the processing sentence s mood and class by contextual sense.

Subsequently, the sentence is analyzed by the interpreting method of mutual function among data of computing units in the second main clause processing sequence (S5), and an analysis value is computed, The second main clause processing sequence is implemented, being subdivided into the fourth step for interpreting tense and voice of verbs and the fifth step for interpreting function of main verb.

After completing the main clause processing sequences (S4,S%), it is determined if the processing of the sentence is complete (S12).

After completing the processing of the sentence, the natural language processing sequence is finished (S15). When a subordinate clause follows the main clause in the sentence, the sentence is analyzed by the interpreting method of mutual function among data through the first subordinate clause processing sequence (S19), and a corresponding analysis value is computed.

The first subordinate clause processing sequence is implemented, being subdivided into a first step for interpreting person and number, a second step for interpreting the relation of Parts of Speech between the subject word and first predicate verb, and a third step for interpreting the relation between the main clause and the subordinate clause.

Subsequently, the sentence is analyzed by the interpreting method of mutual function among data through the second subordinate clause processing sequence (S20), and a corresponding analysis value is computed. The second process sequence of subordinate clause processing sequence is subdivided into a fourth step for interpreting tense and voice of the predicate verb in the subordinate clause and a fifth step for interpreting the function of the predicate verb in the subordinate clause. Therefore, the sequential formulae of subordinate clause (S19, S20) comprise five detailed computing process steps overall. The computing process steps are completed (S22) after making sure of the period at the end of the sentence (S21).

If the sentence (S3) which began with a main clause (S3) is successively followed by a verbal construction (S17), the sentence is analyzed by the interpreting method of mutual function among data through the first process sequence of verbal construction processing sequence (S26), and a corresponding analysis value is computed.

At this point, the first verbal construction processing sequence contains only the first step for interpreting the sense subject and the first predicate verb in the construction.

The sentence is analyzed in succession by interpreting method of mutual function among data in the second verbal construction processing sequence (S27), and a corresponding analysis value is computed.

The second verbal construction processing sequence is implemented, being subdivided into a second step for interpreting tense and voice of a verbal, a third step for interpreting the function of a verbal, and a fourth step for interpreting the function of verbal construction.

The verbal sequential formulae (S26, S27) contain four detailed computing process steps. When the sentence is finished (S28), the computing process steps are completed (S29).

If the sentence (S3) which began with a main clause is successively followed by a co-ordinate clause (S18), the sentence is analyzed by interpreting method of mutual function among data through the first coordinate clause processing sequence (S33), and a corresponding analysis value is computed. The first coordinate clause processing sequence performs the same natural language processing as the first main clause processing sequence (S4) in substance.

That is, the first coordinate clause processing sequence contains the same detailed computing process steps as those of the first main clause processing sequence (S4).

Subsequently, the sentence is analyzed by the interpreting method of mutual function among data through the second coordinate clause processing sequence (S34), and a corresponding analysis value is computed.

The second coordinate clause processing sequence also contains the same detailed computing process steps as those of the second main clause processing sequence (S5).

Therefore, the processing sequence of coordinate clause (S33, S34) agree with the processing sequences of the main clause overall.

When the sentence is finished (S35), all the sequences are complete (S36).

Ii the processing sentence begins with a verbal construction (S6), the sentence is analyzed through the first head, verbal construction processing sequence (S7), and a corresponding analysis value is computed.

Subsequently, after sentence has completed the second head, verbal construction processing sequence (S8), a corresponding analysis value is computed.

Even though the sequential formulae of head, verbal construction (S7, S8) perform the same natural language processing as those of the sequential formulae of middle, verbal construction (S26, S27), each of the sequential formulae should be discriminated because the natural language processing sequence on the head is different from the one in the middle.

The sequential formulae of head, subordinate clause (S10, S11), which contain five detailed steps like the sequential formulae of middle, subordinate clause (S19, S20), perform the same natural language processing as the sequential formulae of middle, subordinate clause in substance.

When a sentence begins with a verbal construction (S6) or a subordinate clause(S9), the processing sequence circulates into the sequential formulae of main clause (S4, S5), when a main clause follows in the sentence, successively (S23). If a verbal construction follows in the sentence(S24) successively, the sentence circulates into the sequential formulae of a verbal construction (S26, S27), and if a subordinate clause follows in the sentence (S25), the sentence circulates into the processing sequence of subordinate clause (S19, S20).

Fig.5 is an illustration for natural language processing sequence in the first main clause processing sequence according to the present invention.

The first main clause processing sequence (501) seeks to analyze stage by stage the relation of Parts of Speech between the subject word and the first predicate verb constructing a frame of the sentence and to establish their "intellectual construct relation". The first main clause processing sequence comprises three computing steps: the first step "P*M" (502), the second step "S*V" (503), and the third step "M*S" (504).

In the first computing step (502) of the first main clause processing sequence (501), concord or discord in person & number between the subject word and the first predicate verb is analyzed, whereby a frame of sentence is constructed.

The previous computing process is referred to as the first step computing process of person & number and abbreviated as "P*N" (502), from now on.

In the first step (502), gender can be determined, which is not always necessary. Therefore, distinction of gender is processed, only if necessary.

An analysis value, which is the core of the present invention, begins to show itself from Fig.5. An analysis value or a worth of analysis is a value which is received from the analyzed function by steps, as the mutual grammatical relation of computing units constructing the structure formulae goes through the processing sequence for performing the natural language processing. Several analysis values are computed for each computing unit, since the contents analyzed through the natural language processing sequence of each step are different. The computed analysis value is stored in a dictionary and used for scientific data of a knowledge base for natural language information processing, machine transLation, and artificial intelligence. A dictionary will be described subsequently with respect to Fig. 11.

Now, analysis values (503, 506) which were computed in the first step of the first main clause processing sequence (502) will be examined.

A computing unit for "is" (506) agrees with the person and number of a computing unit (505) of the noun for "Necessity", whereby a frame of the sentence is constructed. Then, the computing unit for "Nescessity" (505) takes a computed analysis value of the singular third person (3S) in the denominator, and the computing unit for "is" (506) receives a computed analysis value of concord (CC). It should be noted that even though the analysis value computed in the first step (502) is obvious, it is a stage which should not be omitted in the natural language processing sequence.

A sentence, "The poor are not always miserable" is taken as an example for the language processing. If the "P*N" step is omitted in the illustrative sentence, the person and number of "poor" cannot be analyzed. On the contrary, if "poor" goes through the "P*N" step, a computing unit of adjective for "poor" can be replaced with a computing unit for noun, whereby an analysis value of the 3rd Person & Plural (3P) may be computed. The impropriety of "poor" as an adjective is judged by the interpreting method of mutual function among data. The present replacement of the word "poor" with the computing unit is referred to as a Speech Conversion.

In the second step (503), an analysis of which computing units become the nominative case and the first predicate verb is performed among the computing units already interpreted in the person and number of the first step (502). Moreover, the clause which the computing unit belongs to can be determined between main clause (=MC) and the dependent clause (=DC) in a given sentence having a subjective case and a first predicate verb. This analysis is referred to as "the second step, computing process of the subjective case and the first predicate verb" (503), and the second step (503) is abbreviated to "S*V".

Going through the second step, "Necessity" gains an analysis value (512) of the subjective case (SU) in the main clause (MC), and "is" gains an analysis value (513) of the first verb (FV) in the main clause (MC).

In the third step (504), sentences being processed are classified into declarative sentence, interrogative sentence, imperative sentence, prohibitive sentence, and subjunctive sentence by sense, and into indicative mood, imperative mood, and subjunctive mood by modes of expression.

In other words, it is interpreted which sentence structure among the above structures a given sentence belongs to by sense, and in which mood the sentence is included by modes of expression. Therefore, the third step(504) is referred to as 'computing process step of mood and sentence, and this is abbreviated into "M*S".

"Necessity" along with the first verb "is" belongs to a declarative sentence (=DS), and is equivalent to an indicative mood (=DM). Therefore, the subjective case, "Necessity" receives the function of a subject word (=S), and the first verb "is" receives the function of a predicate verb of indicative mood and declarative sentence as their computed analysis values (514, 515). At the same time, a computing unit for the period at the end of the sentence (511) receives a computed analysis value of "PE" (Period) (516).

The interpreting method of mutual function among data is best described with relation to Fig. 5. In the case of the 1st computing step in the first processing sequence of main clause, the grammatical relation formed between a part of speech corresponding to the subject word(s) and the first predicate vert (FV) is interpreted by applying the grammatical rule of person and number.

The grammatical relation formed between them is further interpreted by applying the grammatic rules of syntectical arrangement in the 2nd computing step (S*V), of the kinds of Mood and Sentence by sense in the 3rd computing step (M*S), of tense, voice, and kinds of verbs in the 4th computing step (T*V), and of function of main verb in the 5th computing step (V*F) respectively.

It is through the "interpreting method of mutual function among data" that a singularity of function or a plurality of functions of a word by Parts of speech is interpreted by applying corresponding grammatical rules in each computing step in the processing sequences in order to interpret the grammatical relations formed among "Parts of Speech replaced with computing units" (which is called "data" in the above method).

Fig. 6 is an illustration for the natural language processing sequence in the second main clause processing sequence according to the present invention.

The first predicate verb constructing a frame of sentence is successively processed in the second main clause processing sequence (602).

The second main clause processing sequence (602) is subdivided into two steps. One is referred to as "the fourth step "T*V (Tense & Voice)" (604) and the other is "the fifth step V*F (Main Verb & Form)" (605).

In the fourth computing process step (604), tense of predicate verb is divided into basic form, progressive form, perfect form, perfect progressive form and subdivided into present, past, and future.

This division in tense and voice is necessary for interpreting the mutual grammatical unifying relation and function between main verb(=MV) and auxiliary verb(=AX). This natural language processing of the first predicate verb (609) which was posted (618) out of the third step (603) in the first main clause processing sequence (601) is referred to as "the fourth computing process of tense and voice (604)" and abbreviated to "T * V".

In the fourth step T*V (604), "is" (619) is not combined with another predicate verb but used independently, whereby "is" receives a computed analysis value (609) that the verb has the functions of main verb (=MV) and active voice (=AV), and it is in the present tense (ES). "Is" (619) which was interpreted as a main verb is posted to the fifth step (603) in the second main clause processing sequence computing (620) and analyzed as having a function of main verb by form.

Vertical lines (618, 620, 621) which are seen in Fig.6 signify that the natural language processing sequence is posted from the present step to the next step. These lines are referred to as sequential processing lines.

In the fifth computing-process step (605), act or state of the main verb is determined by interpreting the mutual relation in conjunction of a main verb and another Part of Speech, and the sentence is analyzed by form.

This computing process is referred to as "the fifth computing-process step of main verb act" and abbreviated to "V * F" (Main Verb & Form).

A noun, "mother" (625) gains an analysis value (612) which becomes a subjective complement-( = SC) supplementing the subject word "Necessity" (626), and by taking the complement, "is" (619) receives an analysis value (610) of incomplete intransitive verb (II) which describes a subject word, taking a complement. "The" is, of course, given an analysis value (611) of article (AR).

A preposition, "of" (627) constructs a prepositional phrase taking "invention" (628) as its object word ( = O)(615), and the prepositional phrase, "of invention" functions as an adjective phrase(614) modifying "mother" (613).

In the fifth step (605), two phases of the analysis value conversion and the computing process of modifier phrase (617) are disclosed. The analysis value conversion signifies that an analysis value of a verb's tense (622) is converted into a part of computing unit (624) in the fifth step, regardless of the previously established computing unit of tense (623). A modifier phrase will be described subsequently.

A sentence is not constructed with only main elements. "Of invention" in the sentence, which is a modifier phrase modifying a main element, "SC" (613), is interpreted by the computing process sequence except the first and second processes of main clause. However, the processing sequence of a modifier phrase (617) does not always appear in the natural language processing sequence of the sentence. When the processing sequence of a modifier phrase does appear, it is processed. Therefore, it is omitted in the overall processing sequence in Fig. 4.

The natural language processing in the first and second main clause processing sequences has now been explained.

Fig. 7 is an illustration for the natural language processing sequence in the first and second subordinate clause processing sequences according to the present invention.

A sentence being processed in Fig. 7 has a computed analysis value of nominative complement (714) by going through the fifth step in the second main clause processing sequence (701) in advance, and then by receiving an interrogative pronoun "who" (710), the processing sentence is posted to the first subordinate clause processing sequence (702). "Who" is speech-converted into a relative pronoun (715) which leads a relative clause (subordinate clause).

In the fifth step of the second main clause processing sequence, it should be noted that "PN * RE * SU" (715) which "who" received is not an analysis value but a new computing unit for "who" obtained by the interpreting method of mutual function among data.

The first subordinate clause processing sequence (702) is subdivided into the computing processing sequence of the first, second, and third steps (703, 704, and 705), and the processing contents in the first and the second steps are the same as those in the first and second steps in the first main clause processing sequence. However, in the third step (705) of the first subordinate clause processing sequence, the relation between the main and subordinate clause is interpreted, whereas in the third step of the first main clause processing sequence, the classes of mood and sentence in sense are interpreted. The third step in the first subordinate clause processing sequence is abbreviated to "CL * F" (Clause Function). In Fig. 7, the case of a subordinate clause being in the middle of sentence will be described. The first and second head, subordinate clause processing sequence wherein a subordinate clause in the beginning of a sentence is interpreted will be described in Fig. 8.

Through the first computing process step (703), the relative pronoun, "who" (710) takes Speech Elements of person and number, which are not in its own computing unit, out of the person and number of an antecedent, "man" (709), and receive a computed analysis value which agrees in person & number with a general verb, "wants" (711) which is combined with "who", (716, 717, 718).

By the second computing process step (704), "who" receives "subjective case" (SU) included in the dependent clause (DC) , and "wants" receives "the first predicate verb" (FV) included in the dependent clause, as their computed analysis values corresponding to each word (719,720).

Through the third computing process step (705), "who" and the first word, "man" are analyzed and processed where "who" functions as a subject word (S) (722), and "man" is an antecedent ( = AC) (721). Moreover, analysis values are computed corresponding to each word (722, 723) defining that the relative pronoun clause is an adjective clause in use, and the first predicate verb, "wants" is also included in the adjective clause.

In the second subordinate clause processing sequence (706), there are the fourth and fifth steps-(707, 708). In the fourth step, "T * V"(707), tense and voice of a predicate verb in the subordinate clause are analyzed, and in the fifth step, "V * F" (708), the function of the main verb is interpreted. Thereafter, the subordinate clause is analyzed into five patterns. As a matter of fact, the computing process in the second subordiate clause processing sequence (706) contains the same steps as the fourth and fifth steps in the second main clause processing sequence. However, the computing process of the main clause (702) and the computing process of the subordinate clause (706) should be distinguished from each other for basic knowledge base data by analysis value or the natural language information processing.

Through the fourth computing process step, "wants" (711) receives an analysis value *724) that "wants" (711) is an active voice (AV) and main verb(MV) in the present tense (ES).

Through the fifth computing process step (708), the main verb, "wants" is analyzed to function as a complete transitive verb ( = CT) taking "To-infinitive" as its direct object (DO) in the next computing unit (725, 726).

Subsequently, the "To-infinitive" phrase (712, 713). is posted to the verbal construction processing sequence, and is analyzed to have the function of a verbal. The verbal construction processing sequence will be described in Fig. 9.

Fig. 8 is an illustration showing the natural language processing sequence of the first and second sequences of head, subordinate clause according to the present invention.

The word, "head" is used for distinguishing the case of a subordinate clause beginning at the head of sentence from the other case of a subordinate clause beginning at the middle of sentence as shown in Fig. 7.

Most sentences begin to go through the natural language processing sequence from the first main clause processing sequence. When a sentence begins with a verbal construction or a subordinate clause, it begins the computing process from the first head, verbal construction processing sequence and the first head, subordinate clause processing sequence.

If the computing process sequence of verbal construction which will be described in Fig. 9 needs to be performed, the process sequence of head, verbal construction should be distinguished from the process sequence of middle, verbal construction.

Through the first step(802) in the first process sequence of head, subordinate clause( 801), "is"-(807) agrees with the person and number (808, 809) of "he"(806).

Through the computing process of the second step(803), "he" is interpreted as a subjective case of subordinate clause(810) led by "whether" (805) and "is" is interpreted as the first predicate verb of subordinate clause(811).

Through the computing process of the third step(804), "he" receives an analysis value that it functions as a subject word(813).

Here, "whether" in the head of sentence becomes a noun clause which is the main element in the subordinate clause( = N*CL) (812), and therefore receives a computed analysis value that the first predicate verb, "is" is also included in the noun clause(814). The period of the sentence receives an analysis value of "PE"(815).

Hereafter, the natural language processing sequence in the second sequence of head, subordinate clause analyzes the same contents as analyzed in the second sequence of middle, subordinate clause.

Fig. 9 is an illustration showing the natural language processing sequence of verbal construction according to the present invention.

Verbs are able to be divided into finite and infinite verbs.

An infinite verb which has infinite form of verb functions as a verbal. While a finite verb constructs a frame of sentence, a verbal as an infinite verb constructs a frame of verbal construction. Verbals are divided into infinitive, gerund, and participle.

The first process sequence of verbal construction(902) contains the only processing step(903). This computing process step is referred to as the first step in the first process sequence of verbal construction, "SS * VA" (Sense Subject & Verbal) (903), and takes charge of the natural language processing of the sense subject and the first predicate verb in the verbal construction.

The sense subject of verbal construction and the subject word of main clause may be in accord with each other or may be not in the computing process of the first step.

In the case of being in accord, the sense subject of verbal construction is omitted, and therefore, only the analysis value for the first predicate verb can be computed.

In case of being in discord, both analysis values corresponding to the sense subject and to its first predicate verb are computed.

A sentence which received analysis values (916, 917, 918) in advance through the computing process of the fifth step in the second sequence of main clause (901) is consecutively posted to the computing process of the first step (903) in the first sequence of verbal construction (902) to process the infinitive phrase (910, 911).

Through the computing process of the first step (903), "solve" (911) is read to be the first predicate verb of verbal construction (919) , and the sense subject is in accord with a subject word of main clause "I" (908), therefore, an analysis value of sense subject is omitted.

The computing process sequence of the second step (905) in the second sequence of verbal construction (904) is the same as the computing process sequence of the fourth step in the second sequence of main clause processing sequence. What should be paid attention to in the present step (905) is that even though a "To-infinitive" is combined with a root form of verb divided into simple form, progressive form, perfect form, it does not have the subdivided tenses like the finitive verbs. Voices are divided into passive voice and active voice.

Through the computing process of the second step (905), "solve" (918) which is the object of the preposition, "to" receives an analysis value (920) that it is a root form ( = R) as simple form and main verb (MV) of the "To-infinitive" phrase in the active voice (AV).

The computing process sequence of the third step (906) functions to divide sentence structures into five patterns, which means that by determining the mutual unifying relation between a verbal and computing units of different Parts of Speech, the act or state of the main verb in the sentence structure is interpreted.

The third step in the second verbal construction processing sequence (906) contains the same natural language analysis steps as the computing process of the fifth step in the second main clause processing sequence.

Through the sequence of the third step (906), "solve" (911) receives an analysis value of complete transitive verb (921) which takes "problem" (914) as a direct object (924), functioning as the main verb. Hereupon, "such" (912) and "a" (913) are analyzed into an "adjective" (922) and an "article" (923) respectively. The final step of the processing sequence of verbal construction (902, 904), "PH*F" (Phrase Function)(907) contains a similar analysis to the third step, "CL*F", in the first subordinate clause processing sequence. While the "CL*F" step analyzes the function of the subordinate clause, the "PH*F" step analyzes the function of verbal construction.

Through the computing process of the fourth step (907), "to" (910) receives an analysis value (925) that it becomes a noun phrase as the direct object of "want" (909). Finally, the computing processes are completed by verifying the period at the end of the sentence (927).

Fig. 10 is an illustration for the overall natural language processing sequence according to the present invention.

A sentence "I should not be afraid of making mistakes" is input to the system.

Let us see how the given sentence is processed overall through all the sequential processing sequences as above described.

First, through the computing process sequence of the first, second, and third steps (1011, 1012 and 1013) in the first main clause processing sequence (1010), "I" (1001) receives analysis values that it is the first personal singular pronoun (1022) in the subjective case of the main clause (1024) and the subject word (1026). "Should" (1002) gains analyses values (1027) that it agrees with the person and number of "I" (1023), and it is the first predicate verb (1025) of the indicative mood and declarative sentence (1027) in main clause.

"Should" posted to the fourth step (1015) in the second main clause processing sequence (1014) receives consecutively an analysis value that it is the auxiliary verb in the past tense (1028).

The negative adverb, "not" (1003) is analyzed as having the function of an adverb (1029), and the predicate verb, "be" (1004) receives a computed analysis value (1030) that it is the root form(R) and main verb(MV) in the active voice(AV). The analysis values (1028, 1029, and 1030) computed in the fourth step are collectively referred to as the "Tense Phrase".

"Be" posted to the fifth step (1016) in the second main clause processing sequence is consecutively analyzed into the incomplete intransitive verb (1031). "Afraid" (1005), "of" (1006), and "making" (1007) are analyzed into the complement (1032), the word leading an adverb phrase (1033), and the object word for "of" (1034) respectively. The analysis values (1031, 1032, 1033) computed in the fifth step altogether are referred to as "Form Phrase". Subsequently, "of" posted to the first step (1018) in the first verbal construction processing sequence is interpreted as the adverb phrase leading the verbal construction (1035) and "making" is analyzed into the first predicate verb (1036).

Successively, "making" posted to the second step (1020) in the second verbal construction processing sequence (1019) gains analysis values (1037) that "making" is the main verb in the progressive form (NG) and the active voice. Subsequently "making", posted to the computing process of the third step (1021), is determined to have the function as the perfect transitive verb (1038). "Mistakes" (1008) becomes the direct object (1039) of "making" (1007). Lastly, the all natural language processing sequences are concluded (1040) by verifying the period at the end of sentence (1009).

Fig. 11 is an illustration showing a memory unit according to the present invention.

A memory unit means elements forming a dictionary or a memory system according to the present invention.

A dictionary (or memory system) consists of Speech Elements and computing units by Parts of Speech as well as of memory units classifying and storing all the analysis values computed through the whole natural language processing sequence by means of computing process steps. There may be several computing units in the dictionary as previously searched in Fig.2.

As previously mentioned, the computed analysis values for a computing unit are posted to the "step memory units" (1102, 1103, 1104, 1105, 1106, 1107, 1108, 1109, 1110 and 1111) in a memory unit (1101) and stored in its denominator.

The memory unit may be a critical element of the present invention, and it is impossible to implement natural language information processing with only the processing sequence of the natural language processing. The method for processing the natural language cannot be directly implemented for use until the memory unit is established. In other words, the basic data used for the natural language information processing, the machine translation system, and establishing a knowledge base accomplished by means of the memory unit.

The memory unit of the dictionary consists of several memory units by each computing process step, which are called "Step Memory Unit", and the configuration of a memory unit is similar to the form of a fractional expression like a computing unit (1101).

Step Memory Units are classified into the following:

(1) P*V (1102) (2) S*V (1103) (3) M*S (1104) (4) T*V (1105) (5) V*F (1106) (6) S*F (1107) (6) SS*VA (1108) (8) CL*F (1109) (9) PH*F (1110) (10) U*M (1111)

Most of these step memory units agree with the computing process steps in the sequential processing sequences.

The analysis values are posted to the Step Memory Units corresponding to the subject of the computing process step wherein these analysis values were computed, regardless of the class of the sequential processing sequence. For example, the analysis values computed in the computng process of the first step in the main clause processing sequence and the analysis values computed in the first step in the subordinate clause processing sequence as well can be posted to "P*N" (1107) which is one of the step memory units. The step memory units function by classification. First, "CL*F"(1109) receives analysis values of "Clause Function" and "PH*F"(1110) gains analysis value, of "Phrase Function". The step memory unit of "S*F"(1107) receives analysis values of "Speech Function", i.e., S, O, and C, and AR(article), AJ-(adjective), and AD(adverb), etc. which are modifiers.

When the natural language processing is performed on the character classification which is one of Speech Elements by Parts of Speech or when the meaning and usage of a word, a phrase, or a sentence is analyzed, analysis values corresponding to them are posted and stored in the Step Memory Unit of "U*M" (Usage and Meaning)-(1111).

The step memory unit of U*M is significantly related to the machine translation system.

Fig. 12 is an illustration showing an embodiment of a word memory unit according to the present invention.

A processing sentence used for establishing the word memory unit is the same as the one in Fig. 10.

There are word memory units and phrase memory units established in the creation of a memory unit. The tense phrases (1028, 1030 and 1037) and form phrases (1031, 1032, 1033, 1038 and 1039) in Fig. 10 are used in establishing a phrase memory unit. The creation of a word memory unit alone is described in Fig. 12, and the establishment of phrase memory unit will be illustrated in Fig. 13.

First, the analysis values computed in the first main clause processing sequence in Fig. 10(1010) are ascertained. The words given the analysis values through the first main clause processing sequence are "I"( 1001) and "should"(1002).

The expressions of the analysis values being posted to the memory units for "I" and "should" become "A" and "B" in the drawing. In the memory units of "I" and "should", the analysis values computed in each of the computing process steps (1011, 1012 and 1013) are put on the corresponding denominators of the step memory units (1201, 1202, 1203, 1204, 1205 and 1206). For example, "S" (1026), the analysis value for "I" and "DM*DS" (1027), the analysis value for "should" computed in the third step(1013) are stored in the denominator of "M*S" (1203, 1206) which are the third step memory units.

Let us record the analysis values computed through the second process sequence of main clause on the denominators of memory unit by words. "Should" undergoes its final computing process by posting the analysis value of "AX*ED" (1028) given in "T*V" step (1015) in the second main clause processing sequence to the denominator of the step memory unit, "T*V", (1207). "not" (1003) and "afraid" (1005) interpreted to each of the analysis values as a subordinate element, "AD" (1029) and a main element, "SC" (1032) are posted to the step memory unit "S*F" (1208, 1211). The memory unit of "be" (1004) corresponds to "D". However, since "making" (1007) leaves the verbal construction processing sequences (1017, 1019) behind, the Analysis Value Posting to the second main clause processing sequence is settled temporarily by posting the analysis value of the object (1034) into the denominator of "S*F" (1216) for the creation of the Memory Unit for "making".

In case of "of" (1006), the creation of a memory unit is completed just by posting the analysis value (1033) into the denominator of "S*F" (1212).

Now, let us examine the first verbal construction processing sequence (1017).

A preposition, "of" is also pasted to the first verbal construction processing sequence (1017) with "making" (1035) in order to compute the Analysis Value (1036) that a gerund "making" (1007) is the first verb in the gerund phrase as the object for "of" (1034). "of" is completed through the entire Analysis Value Posting (F) by storing the analysis value (1035) computed in the verbal construction processing sequence on the denominator of the step memory unit, "SS*VA" (1213).

Moreover, "making" receives the analysis value of "the first verb" (1036) on the denominator of the step memory unit, "SS*VA" (1217).

The memory units of "making" and "mistakes" (1008) are established through the final step, and the second verbal construction processing sequence (1019) corresponds to "G" and "H" respectively.

"Making" receives posted analysis values of "MV*NG*AV" (1037) and "CT" (1038) on the corresponding denominators of the step memory units, "T*V" (1214) and "V*F" (1215), through the second verbal construction processing sequence. Whereby, the final memory unit of "making" is established (G). A computed analysis value (1039) for "mistake" is stored (H) on the denominator of "S*F" (1218).

The aforesaid memory units in Fig. 12 contain different information from each other according to the contents of the analysis values stored on their denominator and according to the step memory units on which the analysis values are stored. Information contained in these memory units may be applied to industries. For instance, if the information is utilized for development of a machine translation system, translated words corresponding to the information which each of the memory units contain in Fig. 12 are able to be generated, and all languages having their own grammars may be translated. And, in fact, by using the memory unit-(A) for "I", "I" is translated into

" 나는 (Na-neun)" in

Korean and into

" わたくしは (wa ta

ku si wa)" in Japanese.

Fig. 13 is an illustration for establishing a phrase memory unit according to the present invention. The processing sentence used in Fig. 10 is reused for sescribing the establishing of the phrase memory unit.

There are several kinds of phrase besides tense phrase (Fig. 13A) and form phrase (Fig. 13B) in the phrase memory unit, and hereinafter just tense phrase and form phrase will be dealt with as exemplary. Memory units of tense phrase and form phrase are different from a word memory unit:

By the use of the analysis values (1028, 1029 and 1030) computed by processing verb groups (should not be), the tense phrase establishes (Fig. 13A) a phrase memory unit, and by the use of the analysis values (1031, 1037 and 1033) computed by processing the main verb group (be afraid of), the form phrase establishes a phrase memory unit (Fig. 13B).

The memory units of tense phrase are divided into 12 tenses forming verb groups, and established by all kinds of tense phrases including the passive voice in detail.

In the case of Fig. 13A, the verb group is in the basic future tense among 12 tenses, and the auxiliary verb is in the past tense. The types of the verb groups(1304, 1305 and 1306) ranked in a column under the memory units of tense phrase receive the same analysis values (1028, 1029 and 1030) as those in the fourth step, "T*V" (1015). If the aforesaid verb group (1304, 1305 and 1306) undergoes the natural language processing sequence, it is processed into computing units (1307) seen below and receives the analysis values (1308) placed on the denominator of line in the fractional expression. This shows that the analysis values (1308) agree with the memory units (1301, 1302 and 1303) of tense phrase.

Subsequently, the verb group which found the memory units of tense phrase corresponding to its own analysis values generates corresponding translated words, after comparing words in the processing sentence with ones in Phrase Memory Unit in the dictionary. The memory units of terse phrase are greatly useful for translating the inflection of inflectional languages such as Korean and Japanese in phurticular.

The memory units of form phrase are also established on the same principle (Fig. 13B). The memory units of form phrase, which mean idioms known in a general sense, are also directly related to the machine translation system.

It can be determined that the analysis values (1031, 1032 and 1033) computed in the fifth step, "V*F" (1016) in Fig. 10 agree with the memory unit (1311, 1312 and 1313) in Fig. 13B, and the main verb group of "be afraid of" is one of several main verb groups (1314, 1315 and 1316) placed on the lower part of the memory unit of form phrase.

Fig. 14 is an illustration for one embodiment on realization of knowledge base according to the present invention.

Let us examine if the memory units can be used for knowledge base in addition to the aforesaid machine translation system. The following four sentences which can be composed by using the gerund, "making" are taken as examples for denomstration.

1) Making money is not everything.
2) She is always making trouble.
3) I am good at making hotcakes.
4) She is fond of making her son a new suit.

Then, is it possible to compose all the aforesaid examples by using the memory unit (G) of "making" in Fig. 12? To tell the conclusion first, there is nothing but the sentence 3) which can be made by using the memory unit (G) in Fig. 12.

If the first sentence undergoes the natural language processing sequence, a memory unit of "making" corresponds to "A", and memory units of "making" in the second sentence and the fourth sentence correspond to "B" and "D" respectively. In the case of the fourth sentence, it should be noted that an analysis value, "DV" (dative verb) (1402) placed on the memory unit of "making" (DV) is different from an analysis value, "CT" (complete transitive verb) (1401) for a memory unit (C) corresponding to "making" in the third sentence.

The memory unit of "making" is able to have other analysis values besides four in Fig. 14, through the natural language processing sequences of several sentences. Ignoring the fact that the analysis values are different from each other, even though the final analysis values in one memory unit are the same as those in another one, the contents of information processing contained in the memory unit comes to be distinctly different according to the step memory unit on which the analysis values are stored. Therefore, the answer on the function of "making" in the sentence can be found by interpreting the analysis values stored in the memory unit of "making".

Let us enlarge the object of review on the information processing function of memory unit from words to sentences.

When we compose sentences with words and punctuation marks such as "tell", "start", "will", "time", "you", "me", "the", "when" and "." (period), etc., some examples can be briefly thought out as follow:

1) The time will start when you tell me.
2) Tell me the time when you will start.
3) The time will tell me when you start.
4) Tell me when you will start the time.
5) You tell me when the time will start.

Even though some of these sentences are practically unreasonable in meaning, no particular mistake can be found out in the sentence structures.

Then, let us analyze the sentences through the natural language processing hitherto described according to the present invention.

Without actually undergoing the natural language processing sequence, we can expect that the computed analysis values which these sentences will receive through the processing sequence are different from each other.

Since information is analyzed differently according to analysis values posted to the word memory unit, if a sentence is reconstructed in the reverse order with the word memory unit and the phrase memory unit made by receiving the posted analysis values computed through the computing process of the above sentences, the original sentence which was processed first is put out as a result. The natural language processing sequence according to the present invention should be appropriately arranged, and additional analysis values for dependent relations between a clause and a phrase as well as between main elements and dependent elements should be computed in parallel with other analysis values and posted in the memory unit.

If a sentence is made by using the word memory unit in Fig.12 and the phrase memory unit in Fig.13, nothing can be generated but the original processing sentence in Fig.10, "I should not be afraid of making mistakes",

As above mentioned, the method for processing natural language according to the present invention can be utilized for industries relating to natural language information processing.

The following is the description of a machine translation system using the method of natural language processing according to the present invention.

Hereinafter, an embodiment according to the present invention will be fully described with reference to the drawings. English is the first language in this embodiment.

Fig.15 is a block diagram showing overall composite drawings of the machine translation system according to the present invention. This system is made up of an input part(1501) having a keyboard; a reading dictionary memory part(1508) for classifying English sentences comprising words and symbols(included punctuation marks) input through the input part(1501) by each word and symbol and reading out corresponding contents from the dictionary(1502) and storing them; an original sentence memory part(1503) for storing the input original sentences as translation processing objects; a computing unit memory part(1504) for reading out computing units for corresponding words and symbols in the original sentences from the reading-dictionary memory part (1508) and storing them; an analysis value memory part(1505) for storing analysis values which the computing units for the said words and symbols in the original sentences received, through the natural language processing and machine translation processing sequences; a translated sentence memory unit(1506) for storing translated words corresponding to words and symbols each comprising the original sentence; an output part(1509) for putting out the input original sentence stored in the original sentence memory part(1503) and the translated words stored in the translated sentence memory part(1506), and a central processing unit(1507) for controlling the entire system. In this embodiment, the CPU(1507) may also be referred as the natural language processing and machine translation parts according to its function. Additionally, the output part(1509) is one of the print means corresponding to general printers and the display part for showing objects to be outputted in a monitor, or can be both of the parts combined, and it may omit a reading-dictionary memory part(1508).

Whereas the dictionary(1502) contains all necessary words and symbols like general dictionaries, the said reading-dictionary memory part(1508) classifies only words and symbols comprising the inputted original sentences and reads out corresponding contents from the dictionary (1502), and then stores them during the translating sequence.

Therefore, in the natural language processing and machine translation sequences, not the dictionary(1502) but the reading-dictionary memory part(1508) is used directly and related to the natural language processing and machine translation parts(1507)

Then, the said natural language processing and machine translation parts(1507) perform the natural language processing and machine translation by converting the words and the symbols comprising the input original sentences into the computing units of the reading-dictionary memory part(1508), and after computing analysis values through the processing sequence divided into several steps, store them in the analysis value memory part-(1505). If it is necessary to change an initial computing unit for the sake of the interpretation on original sentences, the initial computing unit can be replaced by reading out another appropriate computing unit from the reading-dictionary memory part(1508), and hereupon the new computing unit is stored in the computing unit memory part(1504) where the initial computing unit was initially stored.

The analysis value memory part(1505) comes to store several analysis values for one computing unit, since the related computing unit receives not only one analysis value through the natural language processing and machine translation sequences but several analysis values according to each processing step as performed. These several analysis values in a combination are called an analysis value group, and with the analysis value group in a unit, a translated word corresponding to it is read out from the reading-dictionary memory part(1508).

Fig. 16 is an illustration showing a construction of the dictionary(1502) according to the present invention, which is divided into two main dictionaries: the word dictionary(1601) and the phrase dictionary (1610). The word dictionary (1601) is made up of words (1607) functioning as an address; Speech Element(1603) having information on contents of the part of speech for the word, a grammatical relation, and the character classification by the functions in meaning or use; computing units( 1604), (1607) comprised by selecting basic contents necessary for being analyzed and being processed through the processing sequence performing the natural language processing and machine translation, among the Speech Elements; analysis value groups(1605),(1608) according to the analysis values computed by the natural language processing of the processing sequence, and translated words( 1606), (1609) whose meanings are altered according to each analysis value group.

The phrase dictionary(1610) involves verb phrase, tense phrase, adverb phrase, noun phrase, and adjective phrase which are comprised based on the words of the word dictionary(1601), and its structure is a little different from that of the word dictionary(1601).

The phrase dictionary(1610) is made up of analysis value groups functioning as an address (1611), (1614); several phrases(1612),(1615) which can receive their own analysis value group, and translated words(1613, 1616) corresponding to the phrases respectively.

The word dictionary(1601) may contain a number of other computing units for one word besides the computing units I (1604) and II(1607), and it may have more than two analysis value groups for each computing unit and more than two translated words corresponding to the said analysis value groups.

The phrase dictionary(1610) may also have a number of other analysis value groups which are not illustrated besides the analysis value groups I-(1611) and II(1614) and contain more than two phrases corresponding to one analysis value group and more than two translated words, too.

Also, the word dictionary(1601) contains punctuation marks, and the construction of the punctuation marks corresponds to the one of the word dictionary(1601). The parts of a translated word in the word dictionary or the phrase dictionary, without restricting to one language, may contain translated words in, e.g., Korean and Japanese, or others, at the same time.

Finally, the word dictionary and the phrase dictionary related to each other, are simultaneously read out and stored in the reading-dictionary memory part(1508) when they are read out.

Fig. 17 is an overall flow chart of the machine translation system according to an embodiment of the present invention, which is similar to the flow charts of the natural language processing sequence in Fig.4. What is different from the sequence in Fig.4 is that whenever each computing processing step is performed, word-order of translation is decided except that analysis values are computed, and translation word-order is shifted according to languages chosen by users. The computed analysis value is stored in the analysis value memory part(1505). In case analysis values for a phrase are computed, which is different from the case of the analysis values for words being computed, immediately after the phrase is looked up in the reading-dictionary memory part(1508) and the translated words are determined, they are stored in the translated sentence memory part(1506).

First, when an original sentence is input (S102) in the input part(1501), the input original sentence is divided into words and punctuation marks, and the word dictionary and the phrase dictionary corresponding to the words and punctuation marks each are read out from the dictionary(1502), which are stored(S103) in the reading-dictionary memory part(1508).

Finding initial computing units which can be alternated with the words and punctuation marks out of the dictionary(1502), the initial computing units are stored in the computing unit memory part(1504), and after entering the natural language processing and machine translation parts(1507), perform(S104) the natural language processing and machine translation. When the input original sentence is analzed(S105) into a sentence beginning with a main clause, by the interpreting method of mutual function among data of the computing units, analysis values and word-order of translation for the input original sentence are computed and decided(S109) by the interpreting method of mutual function among data of the computing units through the first main clause processing sequence (S108).

Subsequently, the input original sentence is analyzed by the interpreting method of mutual function among data of the computing units through the second main clause processing sequence (S110) where anlysis values are computed and the word-order of translation for the input original sentence is decided(S111). If analysis values for a phrase are computed when analysis values and word-order of translation for the input original sentence are computed and decided(S109, S111), translated words for the phrase are generated by looking up the reading-dictionary memory part(S161).

If there are no analysis values for a phrase to look up, the reading-dictionary memory part(S161) is not implemented.

After finishing the main clause processing sequences (S108, S110), it is determined if the input original sentence is completed (S112). When the sentence is finished, the natural language processing and machine translation are completed (S150), and in the case of the input original sentence leading a subordinate clause, it is anlayzed by means of the interpreting method of mutual function among data through the first subordinate clause processing sequence (S124), whereby analysis values are computed and word-order of translation is determined (S125).

Subsequently, the input original sentence is analyzed by means of the interpreting method of mutual function among data, through the second subordinate clause processing sequence (S126), whereby analysis values are computed and word-order of translation is determined (S127). Then, while analysis values are computed and word-order of translation is decided (S125, S127) after going through the subordinate clause processing sequence (S124, S126), if analysis values for a phrase are computed, translated words for the phrase are generated by looking up the beading-dictionary memory part (S162) as in the previously described main clause processing sequence. After finishing the input original sentence (S128), the natural language processing and machine translation is completed (S151).

If the input original sentence (S105) beginning with a main clause leads a verbal construction, successively (S122), the input original sentence is analyzed by means of the interpreting method of mutual function among data, through the first verbal construction processing sequence (S132), whereby analysis values are computed and word-order of translation is determined (S133). Subsequently, the input original sentence is analyzed by means of the interpreting method of mutual function among data through the second verbal construction processing sequence (S134), whereby analysis values are computed and word-order of translation is determined (S135). While analysis values are computed and word-order of translation is determined (S133, S135) through the aforesaid verbal construction processing sequence, if analysis values for a phrase are computed, corresponding translated words are generated by looking up the reading-dictionary memory part (S163). When the input original sentence is finished (S136), the natural language processing and machine translation is completed (S152),

When the input original sentence (S105) beginning with a main clause leads a co-ordinate clause (S123), the input original sentence is analyzed by means of the interpreting method of mutual function among data through the first co-ordinate clause processing sequence (S140), thereafter analysis values are computed and word-order of translation is determined (S141). Subsequently, the original sentence is analyzed by means of the interpreting method of mutual function among data through the second co-ordinate clause processing sequence (S142), thereafter analysis values are computed and word-order of translation is determined (S143). In case analysis values are computed, appropriate translated words are generated (S164) out of the reading-dictionary memory part (1508). Afterwards, when the input original sentence is finished (S144), the entire process sequence is completed (S153).

If an original sentence begins with a verbal construction (S106), the input original sentence is analyzed by the interpreting method of mutual function among data through the first head, verbal construction processing sequence (S113), thereafter analysis values are computed and word-order of translation is determined (S144). Consecutively, after going through the second of head, verbal construction processing sequence (S115), analysis values are computed and word-order of translation is determined (S116). Even though the head, verbal construction processing sequences (S113, S115) perform the same natural language processing and machine translation steps as the verbal construction processing sequences (S132, S134) each of these sequences should be discriminated because the performing the response in the head of the sentence is somewhat different from the one in the middle.

The case of an original sentence beginning with a subordinate clause (S107) should be discriminated from the one of an original sentence leading a subordinate clause (S121). In case of original sentences beginning with a verbal construction (S106) or a subordinate clause (S107), if these sentences lead main clauses (S129), the original sentence processing circulates to the main clause processing sequence (S108, S110). If they are followed by a verbal construction (S130), the original sentence processing comes to circulate to the verbal construction processing sequences (S132, S134), and if they are followed by a subordinate clause (S131), the processing comes to circulate to the subordinate clause processing sequences (S124, S126).

Fig. 18 is a flow chart for looking up translated words for a phrase out of the reading-dictionary memory part (1508) in the sequence of performing the natural language processing and machine translation according to one embodiment of the present invention. When analysis values for a phrase are computed (A), the analysis values for the phrase computed through the processing sequence are ascertained in the reading-dictionary memory part (1508) if it agrees with the analysis values stored in the phrase dictionary (B). In case of disagreement, it is determined whether the second analysis values of a phrase exist in the phrase dictionary or not (C), and when it is judged that another analysis value group does not exist, this sequence is completed (I). However, if another analysis value group for a phrase is determined to exist in the phrase dictionary, the corresponding analysis value group is read out (D).

When the analysis value group for a phrase computed through the processing sequence agrees with the read analysis value group in the phrase dictionary (B), a concrete comparison by words between the phrase in the original sentence and illustrations of phrase according to the analysis value group read out in the phrase dictionary is carried out. Hereupon, in case of disagreeing with each other in the comparison by words (E), it is determined whether another phrase exists or not in the read phrase dictionary (F). If there are illustrations of another phrase, the corresponding phrase is read out (G), otherwise the present sequence is completed (I). In case the phrase in the original sentence agrees with the phrase read out in the phrase dictionary in the comparison by words, corresponding translated words for phrase, which are read out from the phrase dictionary, are stored (H) in the translated sentence memory part (1506). The computed analysis value group for a phrase do not always agree with the one for a phrase in the phrase dictionary and receive computed translated words for a phrase, even though the analysis values for the phrase are computed through the processing sequence. Therefore, if the sequence is completed without generating translated words for the computed analysis value group for a phrase, after these analysis values are compared with analysis values in the word dictionary respectively, translated words are generated by words.

Fig. 19 is a flow chart showing a word translating sequence according to the present invention, and the present sequence is implemented after analysis values are computed and word-order of translation is determined through the natural language processing and machine translation and the interpretation for the said phrase is completed.

When a word translating sequence starts (K), it is ascertained if translated words for the words of the original sentence are already generated (L), which is a determination of whether the translation for the phrase is already performed or not, since the translation for the phrase is prior to the translation for the word. If there are not translated words for the words of the original sentence, it is referred to (P) whether computing units for the words of the original sentence agree with those of the word dictionary is read out and stored in the computing unit memory part (1504). In case of disagreement, a computing unit next to the computing units which were already read out in the dictionary is read out (Q). In case of agreement between computing units for the words of original sentence and the computing units of the word dictionary, it is subsequently ascertained (R) if the analysis values computed through the processing sequence agree with the analysis values in the word dictionary (R), and in case of disagreement between the computed analysis value and the analysis value in dictionary, the second analysis value in the word dictionary is read out (S). In case of agreement between the analysis values, desired translated words according to the analysis value group in the word dictionary are selected and stored (T) in the translated sentence memory part (1506). A desired translation means Korean, in case a user wants a Korean translation, and Japanese in case a user wants a Japanese one, and a bilingual translation is simultaneously performed if a user wants both of them, because there can be words translated into more than two different languages in the dictionary according to the present invention.

In case translated words for the words of the original sentence are already found (L) or translated words found according to the analysis values in the word dictionary are stored (T) in the translated sentence memory part (1506), it is ascertained if all the words of the original sentence are referred to (M). If there still remains any word of original sentence to be translated, corresponding words are read out (N), and then the present sequence is repeated, and in case all the words of the original sentence are referred to, the present sequence is completed (O).

Fig. 20 is an illustration for showing an embodiment of a final simple machine translation by means of the word dictionary read out and the computed analysis values through the processing sequence according to the present invention. If a sentence of "My son who is a smart student will be a Newton" (a) is inputted as an original sentence, "student", the input word, receives a computed analysis value group (2021) among analysis value groups in the analysis value memory part (1505) of Fig. 20 C through the sequences of the natural language processing and machine translation according to the present invention.

Accordingly, as above mentioned in Fig. 19, the computed analysis value group for "student" (2021) is compared with analysis value groups (2001, 2002) which are read out in the word dictionary of "student".

Certainly, it goes without saying that an agreement between the computing unit in the computing unit memory part (1604) of "student" and the computing unit in the word dictionary should precede the comparison of analysis value groups. A mere agreement between a computed analysis value (2023) and the analysis value in the word dictionary (2018) is not enough for comparing between the computed analysis value (2023) and the analysis value in the word dictionary (2018). But also, step memory units (2026, 2021, 2028, 2012, 2013, 2014, 2015, 2016, 2017), which show where analysis values were computed among the detail steps of the processing sequence for performing the natural language processing and machine translation, and the function and the use in sense of the computed analysis values, should agree.

Accordingly, the analysis value group (2021) for "student" of the original sentence (a) in the analysis value memory part (1605) agrees perfectly with the analysis value group I (2001) between the analysis value groups (2001, 2002) stored in the word dictionary of "student" (1601). That's because the step memory unit (2026) in the analysis value memory part (1605) where the computed analysis values are placed agrees with the step memory unit (2014) in the word dictionary. A translated word for "student" of the original sentence (a) corresponds to a translated word I (2006) according to the analysis value group (2001), and hereupon according to which language the word will be translated into, the word can be selectively or simultaneously translated into Korean (2003) or Japanese (2004) or French (2005).

In case of the translation of a word of Korean, a translated word of the original sentence (a) corresponds to

" 학생 " (Hak Saeng)

(2008), and in case of Japanese, it will be translated into

" がくせい (Ga Ku Sei)"

(2020). Then, the final Korean translation for the original sentence (a) comes to correspond to (a″).

Now, if a sentence of "Watermelon which is a fresh fruit is good for the student to eat" (b) is input as an original sentence, "student" receives analysis values (2024, 2025) in the analysis value memory part (1605) by means of the natural language processing and machine translation, as "student" in the said original sentence (a). This analysis value group (2022) agrees with the step memory units (2016, 2017) and analysis values (2019, 2020) of the analysis value group II (2002) in the word dictionary. A translated word for the analysis value group II (2002) corresponds to a translated word II (2007), and if a translation object chosen by a user is the Korean language (2003), the word is translated into

"학생이" (2009),

and if a translation object is Japanese (2004), it will be translated into

"がくせいが"

(2011). Then, the final Korean translation for the original sentence (b) comes to correspond to (b″).

As above mentioned, the machine translation system according to the present invention is clearly distinguishable from the conventional translation system.

Various modification may be made at will without departing from the purpose and technological spirit of the present invention.

## Claims

1. A method for processing natural language; which method comprises the steps of: transforming words forming a sentence of a natural language into computing units made up of Speech Elements containing parts of speech which are selected for analyzing and processing a natural language, and then computing analysis values among Speech Elements having information concerning character classification, meanings of Parts of Speech, grammatical relation, and functions in sense or by use of words; computing structure formulae which express a sentence in a natural language as a set of computing units; computing an analysis value having information of natural language processing through a processing sequence by the use of an interpreting method of mutual function among data, comprising analyzing the grammatical relation and function in sentence structure between selected computing units and including: a first main clause processing sequence for interpreting the relationship of Parts of Speech between a subject word in a main clause and its predicate verb forming a processing sentence of the natural language; a second main clause processing sequence for interpreting the tense and voice of a predicate verb and the function of the main verb combining with the subject word: a first verbal construction processing sequence for interpreting the relationship of Parts of Speech between a sense subject word and a verbal construction; a second verbal construction processing sequence for interpreting the tense, voice, and function of the verbal combining with the sense subject word in the verbal construction; a first subordinate clause processing sequence for interpreting the relationship of Parts of Speech between the subject word and the first predicate verb; and a second subordinate clause processing sequence for interpreting tense and voice of the predicate verb and function of the main verb; and storing analysis values computed by means of the said interpreting method of mutual function among data.

2. A method as claimed in Claim 1 wherein a computing unit corresponds to one word.

3. A method as claimed in Claim 1 or Claim 2 wherein a computing unit comprises a plurality of sub-computing units.

4. A translation system comprising: input means for inputting a translating language; dictionary means for storing computing units for the translating language, analysis values, desired translated words of a natural language according to an analysis value; reading-dictionary memory means for reading out computing units corresponding to an input original sentence, Speech Elements, analysis values, and desired translated words of the natural language out of the said dictionary means, and for storing them during a translation processing sequence; original sentence memory means for storing the input original sentence; computing unit memory means for reading out computing units of the original sentence being translated out of the said reading-dictionary memory means and storing them; analysis value memory means for storing the analysis values computed by means of analysis of a grammatical relation and sentence structure of the said stored computing units; translated sentence memory means for storing the translated sentence; output means for outputting translation information stored in the said translated sentence memory part; and a processing means for controlling each of the said means.

5. A translation system as claimed in Claim 4 wherein the said dictionary means and reading-dictionary memory means store more than one desired natural language and translate it into a plurality of target languages, simultaneously.

FIG.1

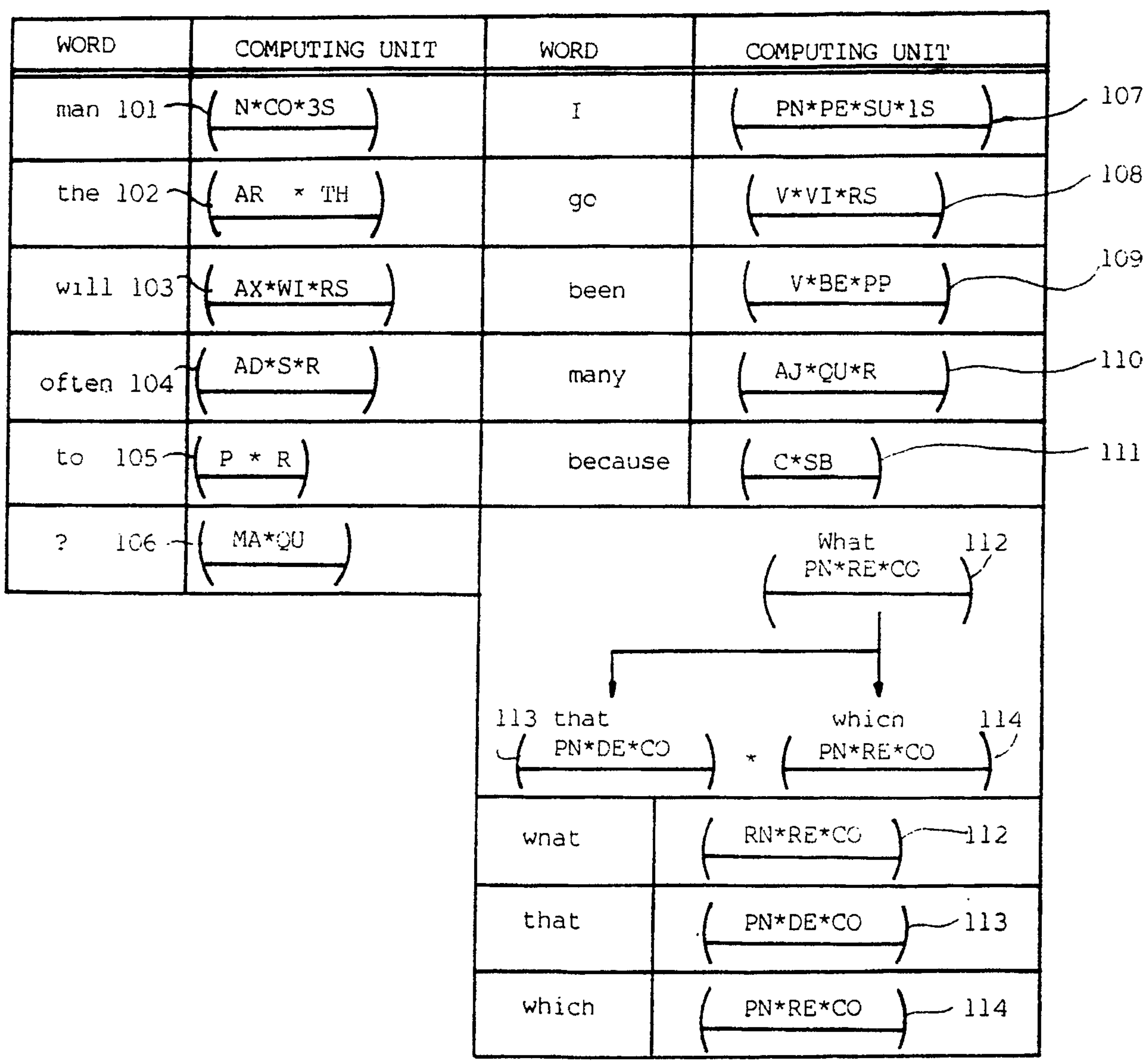
WORD
COMPUTING UNIT
WORD
COMPUTING UNIT
man 101
N*CO*3S
the 102
AR * TH
will 103
AX*WI*RS
often 104
AD*S*R
to 105
P * R
? 106
MA*QU
I
PN*PE*SU*1S
107
go
V*VI*RS
108
been
V*BE*PP
109
many
AJ*QU*R
110
because
C*SB
111
What
PN*RE*CO
112
113 that
PN*DE*CO
*
which
PN*RE*CO
114
what
RN*RE*CO
112
that
PN*DE*CO
113
which
PN*RE*CO
114

# FIG.2

| COMPUTING UNITS BY PARTS OF SPEECH FOR 'THAT' | |
|---|---|
| COMPUTING UNIT I | PN*DE*CO*3S 201 |
| COMPUTING UNIT II | AJ*DE 202 |
| COMPUTING UNIT III | AD*S 203 |
| COMPUTING UNIT IV | C*SB 204 |
| ⋮ | ⋮ |

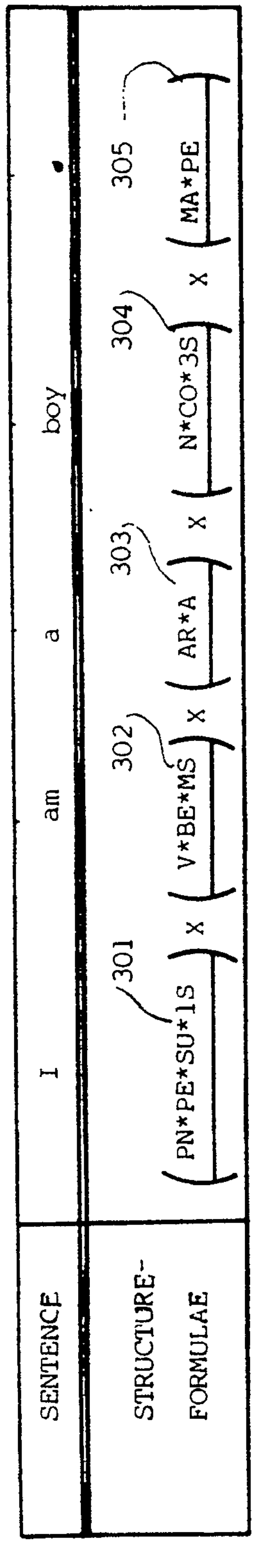
SENTENCE
I
am
a
boy
.
STRUCTURE-FORMULAE
(PN*PE*SU*1S) x (V*BE*MS) x (AR*A) x (N*CO*3S) x (MA*PE)
301
302
303
304
305

FIG.3

FIG. 4B

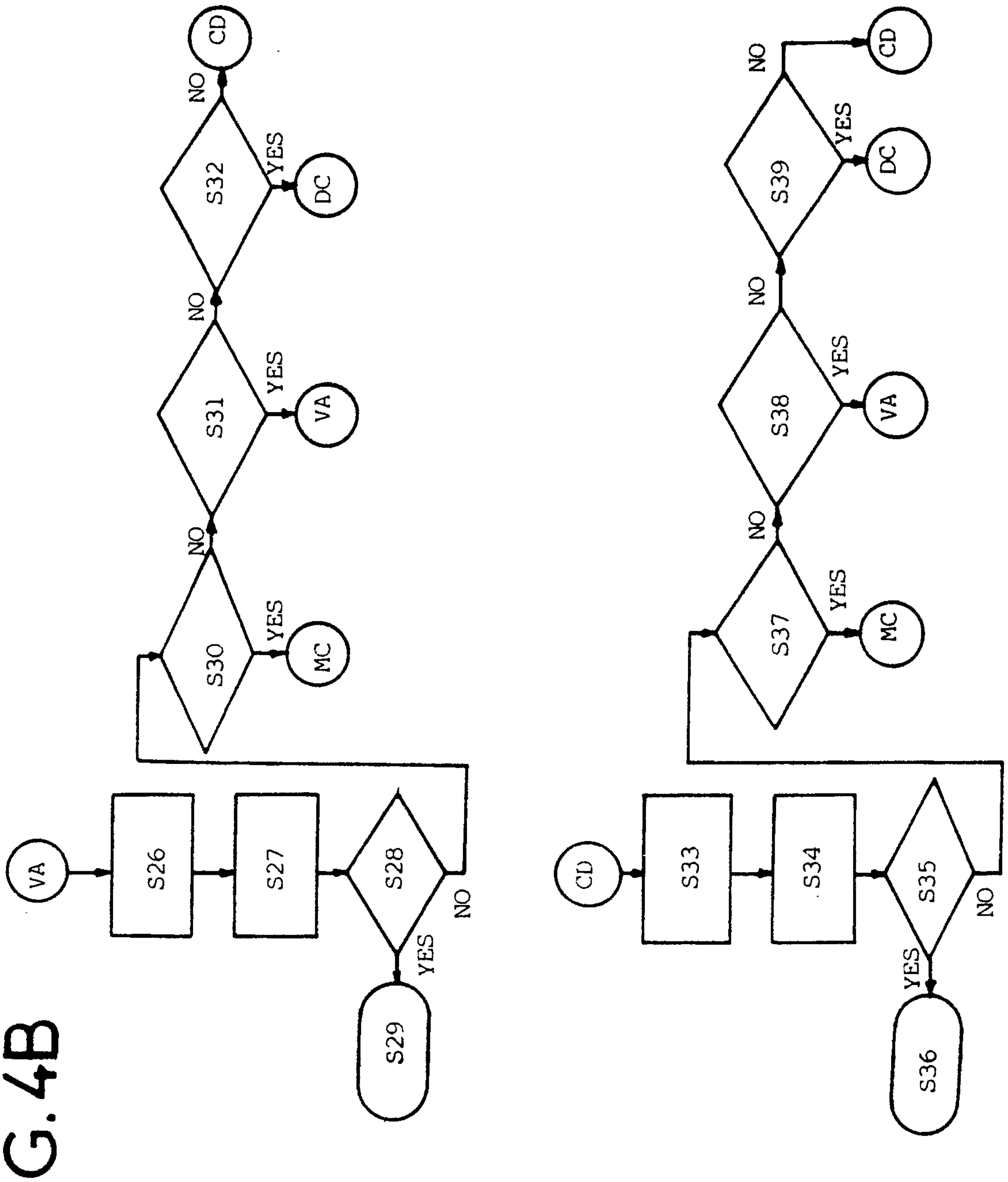
VA
S26
S27
S28
YES
NO
S29
S30
YES
MC
NO
S31
YES
VA
NO
S32
YES
DC
NO
CD
CD
S33
S34
S35
YES
NO
S36
S37
YES
MC
NO
S38
YES
VA
NO
S39
YES
DC
NO
CD

FIG.5

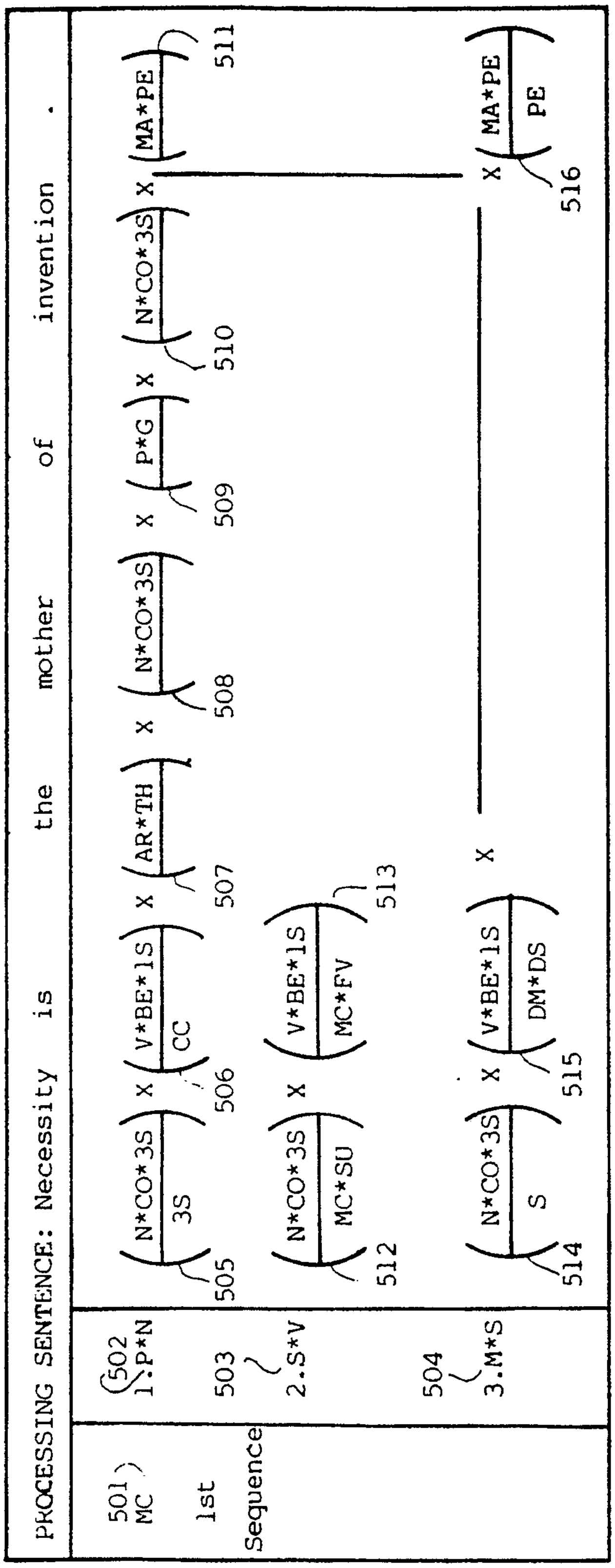

PROCESSING SENTENCE: Necessity is the mother of invention .
501 MC
1st Sequence
502 1.P*N
503 2.S*V
504 3.M*S
N*CO*3S 3S 505
X
V*BE*1S CC 506
X
AR*TH 507
X
N*CO*3S 508
X
P*G 509
X
N*CO*3S 510
X
MA*PE 511
N*CO*3S MC*SU 512
X
V*BE*1S MC*FV 513
N*CO*3S S 514
X
V*BE*1S DM*DS 515
X
X
MA*PE PE 516

FIG. 6

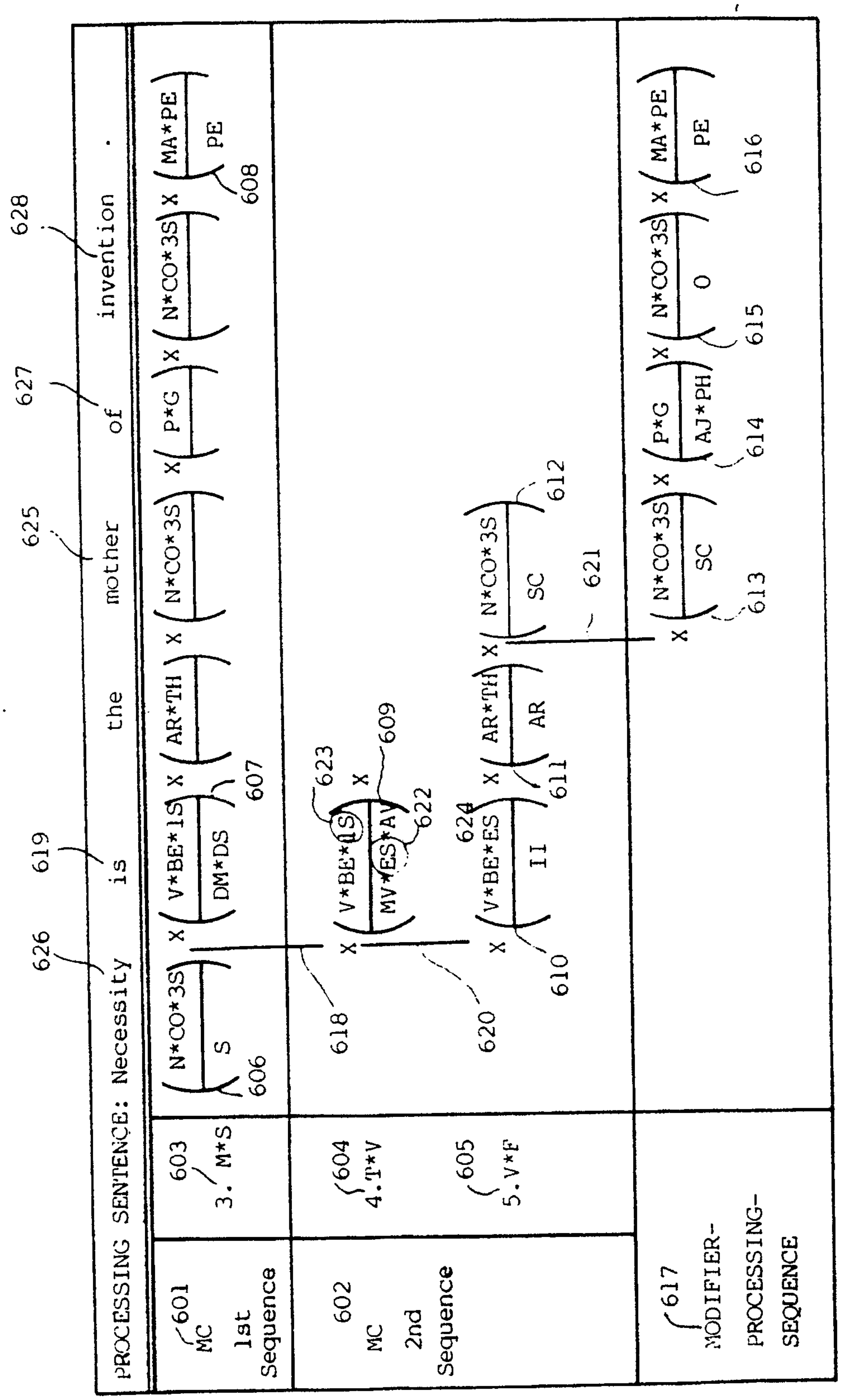
PROCESSING SENTENCE: Necessity is the mother of invention .
626
619
625
627
628
601 MC 1st Sequence
603 3. M*S
N*CO*3S
S
606
V*BE*1S
DM*DS
607
AR*TH
N*CO*3S
P*G
N*CO*3S
MA*PE
PE
608
602 MC 2nd Sequence
604 4. T*V
618
V*BE*1S
MV*ES*AV
623
622
609
605 5. V*F
620
V*BE*ES
II
610
624
AR*TH
AR
611
N*CO*3S
SC
612
621
617 MODIFIER-PROCESSING-SEQUENCE
N*CO*3S
SC
613
P*G
AJ*PH
614
N*CO*3S
O
615
MA*PE
PE
616

FIG.7

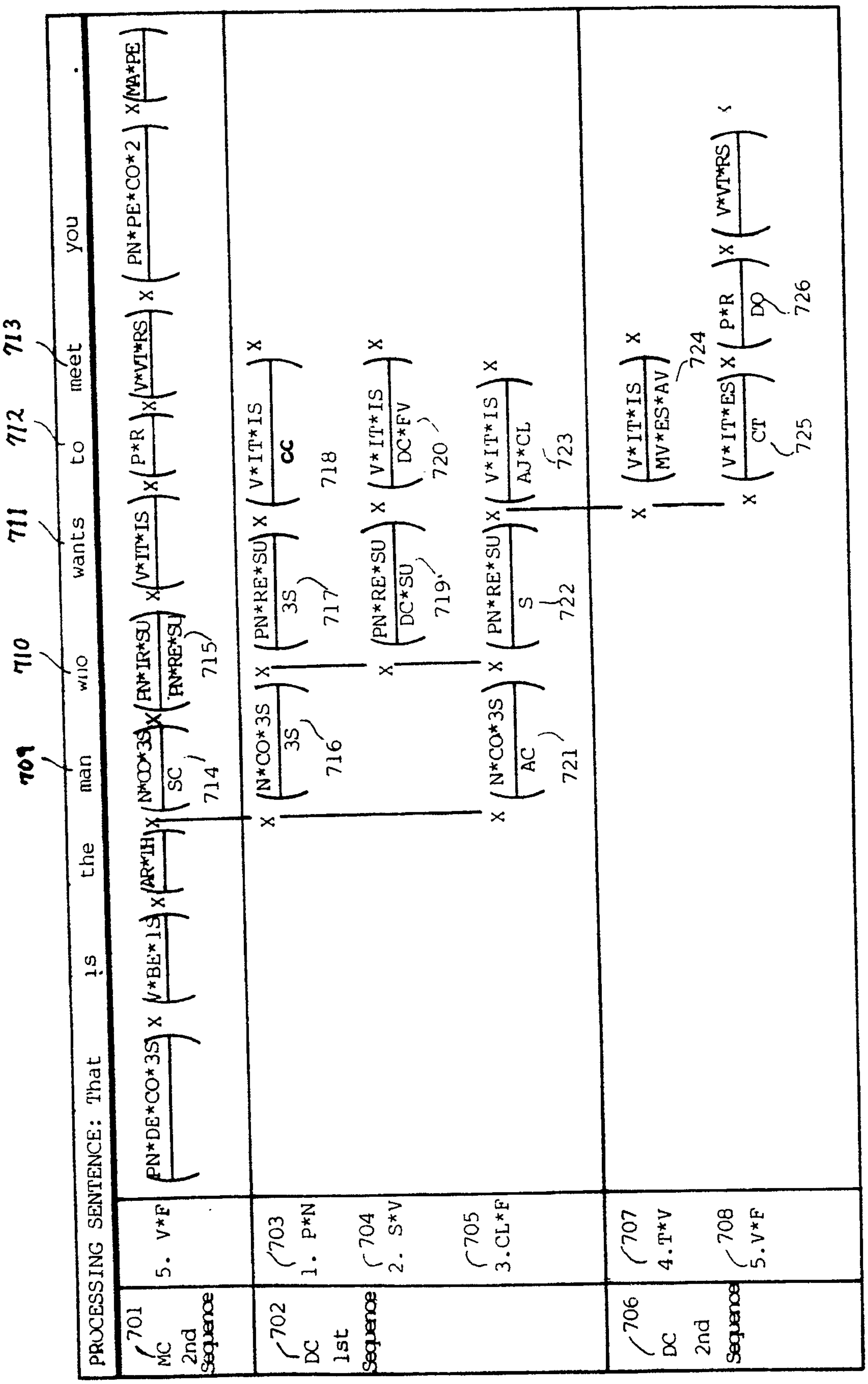
PROCESSING SENTENCE: That is the man who wants to meet you .
709
710
711
712
713
701 MC 2nd Sequence
5. V*F
PN*DE*CO*3S
V*BE*1S
AR*1H
N*CO*3S SC 714
PN*IR*SU PN*RE*SU 715
V*IT*IS
P*R
V*VT*RS
PN*PE*CO*2
MA*PE
702 DC 1st Sequence
703 1. P*N
N*CO*3S 3S 716
PN*RE*SU 3S 717
V*IT*IS CC 718
704 2. S*V
PN*RE*SU DC*SU 719
V*IT*IS DC*FV 720
705 3.CL*F
N*CO*3S AC 721
PN*RE*SU S 722
V*IT*IS AJ*CL 723
706 DC 2nd Sequence
707 4.T*V
V*IT*IS MV*ES*AV 724
708 5.V*F
V*IT*ES CT 725
P*R DO 726
V*VT*RS

FIG.8

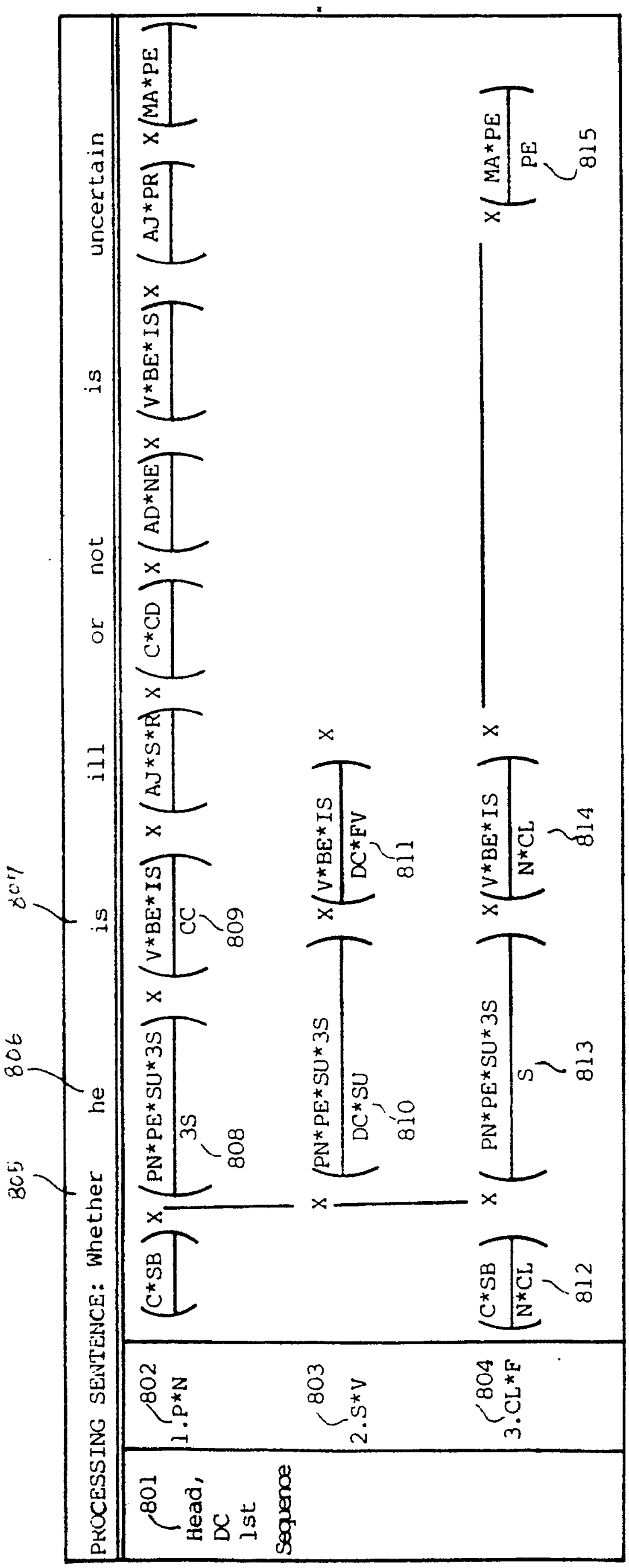
PROCESSING SENTENCE: Whether he is ill or not is uncertain
805
806
807
801
Head,
DC
1st
Sequence
802
1.P*N
803
2.S*V
804
3.CL*F
C*SB
PN*PE*SU*3S
3S
808
V*BE*IS
CC
809
AJ*S*R
C*CD
AD*NE
V*BE*IS
AJ*PR
MA*PE
PN*PE*SU*3S
DC*SU
810
V*BE*IS
DC*FV
811
C*SB
N*CL
812
PN*PE*SU*3S
S
813
V*BE*IS
N*CL
814
MA*PE
PE
815

FIG.9

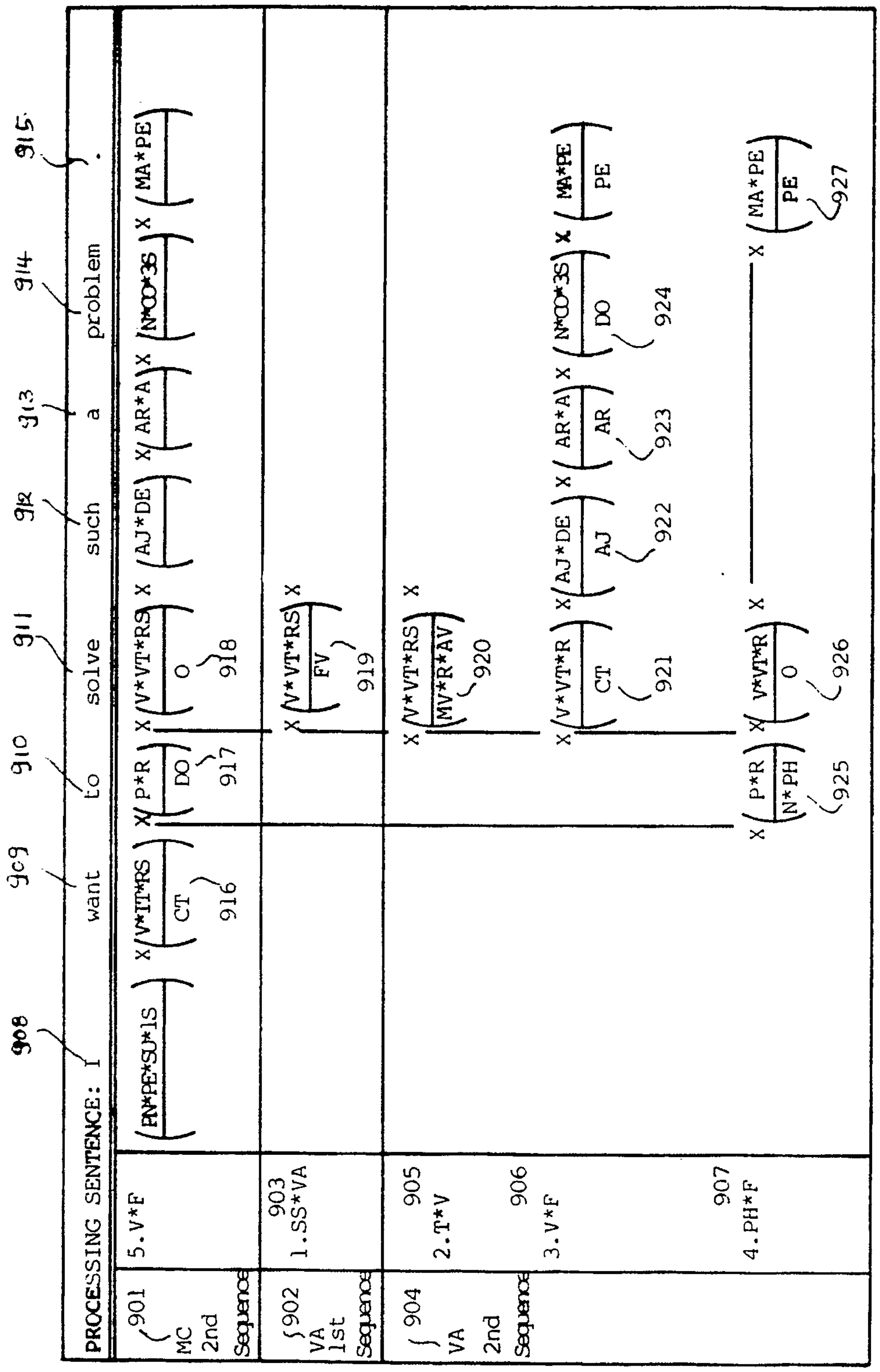
PROCESSING SENTENCE: I want to solve such a problem .
908
909
910
911
912
913
914
915
901 MC 2nd Sequence
5.V*F
902 VA 1st Sequence
903 1.SS*VA
904 VA 2nd Sequence
905 2.T*V
906 3.V*F
907 4.PH*F
PN*PE*SU*1S
V*IT*RS CT 916
P*R DO 917
V*VT*RS O 918
AJ*DE
AR*A
N*CO*3S
MA*PE
V*VT*RS FV 919
V*VT*RS MV*R*AV 920
V*VT*R CT 921
AJ*DE AJ 922
AR*A AR 923
N*CO*3S DO 924
MA*PE PE
P*R N*PH 925
V*VT*R O 926
MA*PE PE 927

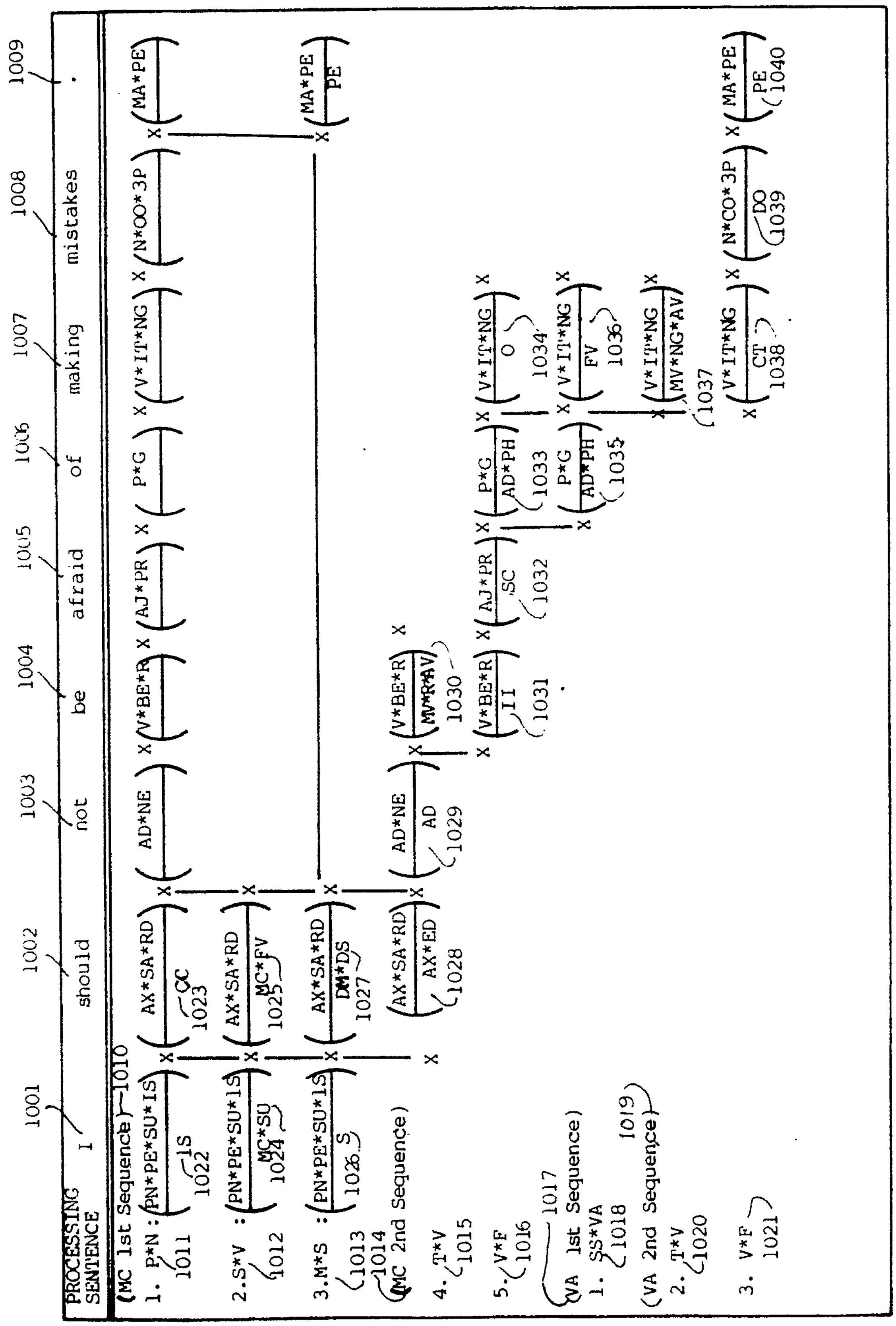
PROCESSING SENTENCE
I
should
not
be
afraid
of
making
mistakes
.
1001
1002
1003
1004
1005
1006
1007
1008
1009
1010
(MC 1st Sequence)
1. P*N : PN*PE*SU*1S / 1S
AX*SA*RD / CC
AD*NE
V*BE*R
AJ*PR
P*G
V*IT*NG
N*OO*3P
MA*PE
2.S*V : PN*PE*SU*1S / MC*SU
AX*SA*RD / MC*FV
3.M*S : PN*PE*SU*1S / S
AX*SA*RD / DM*DS
MA*PE / PE
(MC 2nd Sequence)
AX*SA*RD / AX*ED
AD*NE / AD
V*BE*R / MV*R*AV
4. T*V
5. V*F
V*BE*R / II
AJ*PR / SC
P*G / AD*PH
V*IT*NG / O
V*IT*NG / FV
V*IT*NG / MV*NG*AV
(VA 1st Sequence)
1. SS*VA
(VA 2nd Sequence)
2. T*V
3. V*F
V*IT*NG / CT
N*CO*3P / DO
MA*PE / PE
1011
1012
1013
1014
1015
1016
1017
1018
1019
1020
1021
1022
1023
1024
1025
1026
1027
1028
1029
1030
1031
1032
1033
1034
1035
1036
1037
1038
1039
1040

FIG.10

FIG.11

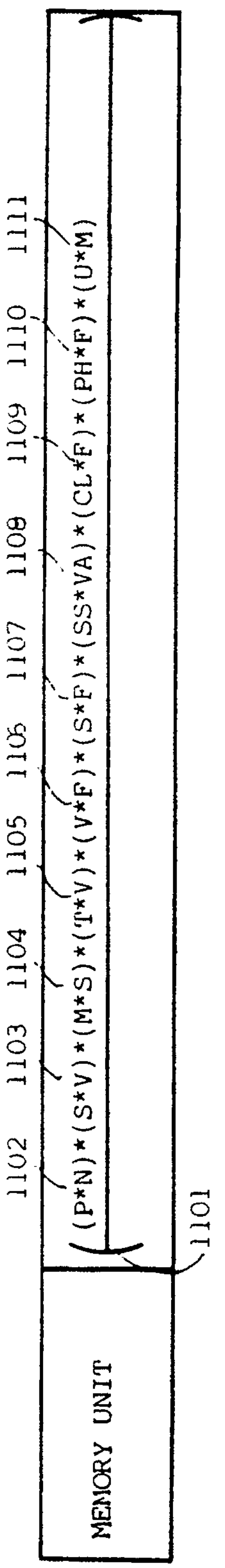
MEMORY UNIT
(P*N)*(S*V)*(M*S)*(T*V)*(V*F)*(S*F)*(SS*VA)*(CL*F)*(PH*F)*(U*M)
1101
1102
1103
1104
1105
1106
1107
1108
1109
1110
1111

# FIG.12

| WORD | MEMORY UNIT RECEIVING COMPUTED ANALYSIS VALUES |
|---|---|
| I | 1201 1202 1203<br>(P*N)*(S*V)*(M*S)*(T*V)*(V*F)*(S*F)*(SS*VA)*(CL*F)*(PH*F)*(U*M)<br>1S MC*SU S<br>A |
| Should | 1204 1205 1206 1207<br>(P*N)*(S*V)*(M*S)*(T*V)*(V*F)*(S*F)*(SS*VA)*(CL*F)*(PH*F)*(U*M)<br>CC MC*FV DM*DS AX*ED<br>B |
| not | 1208<br>(P*N)*(S*V)*(M*S)*(T*V)*(V*F)*(S*F)*(SS*VA)*(CL*F)*(PH*F)*(U*M)<br>AD<br>C |
| be | 1209 1210<br>(P*N)*(S*V)*(M*S)*(T*V)*(V*F)*(S*F)*(SS*VA)*(CL*F)*(PH*F)*(U*M)<br>MV*R*AV II<br>D |
| afraid | 1211<br>(P*N)*(S*V)*(M*S)*(T*V)*(V*F)*(S*F)*(SS*VA)*(CL*F)*(PH*F)*(U*M)<br>SC<br>E |
| of | 1212 1213<br>(P*N)*(S*V)*(M*S)*(T*V)*(V*F)*(S*F)*(SS*VA)*(CL*F)*(PH*F)*(U*M)<br>AD*PH AD*PH<br>F |
| making | 1214 1215 1216 1217<br>(P*N)*(S*V)*(M*S)*(T*V)*(V*F)*(S*F)*(SS*VA)*(CL*F)*(PH*F)*(U*M)<br>MV*NG*AV CT O FV<br>G |
| mistakes | 1218<br>(P*M)*(S*V)*(M*S)*(T*V)*(V*F)*(S*F)*(SS*VA)*(CL*F)*(PH*F)*(U*M)<br>DO<br>H |

FIG.13A

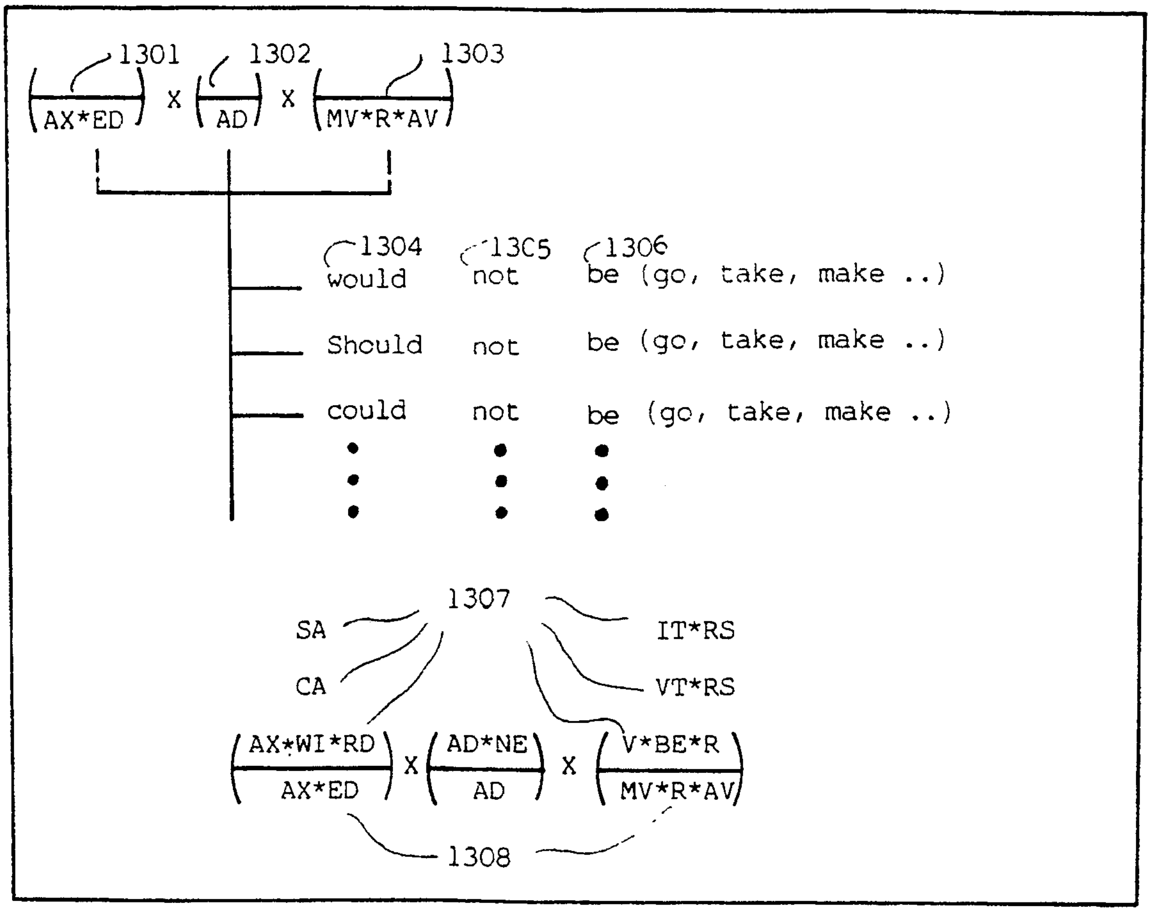
1301
1302
1303
AX*ED
X
AD
X
MV*R*AV
1304
1305
1306
would
not
be (go, take, make ..)
Should
not
be (go, take, make ..)
could
not
be (go, take, make ..)
1307
SA
CA
IT*RS
VT*RS
AX*WI*RD
AX*ED
X
AD*NE
AD
X
V*BE*R
MV*R*AV
1308

FIG.13B

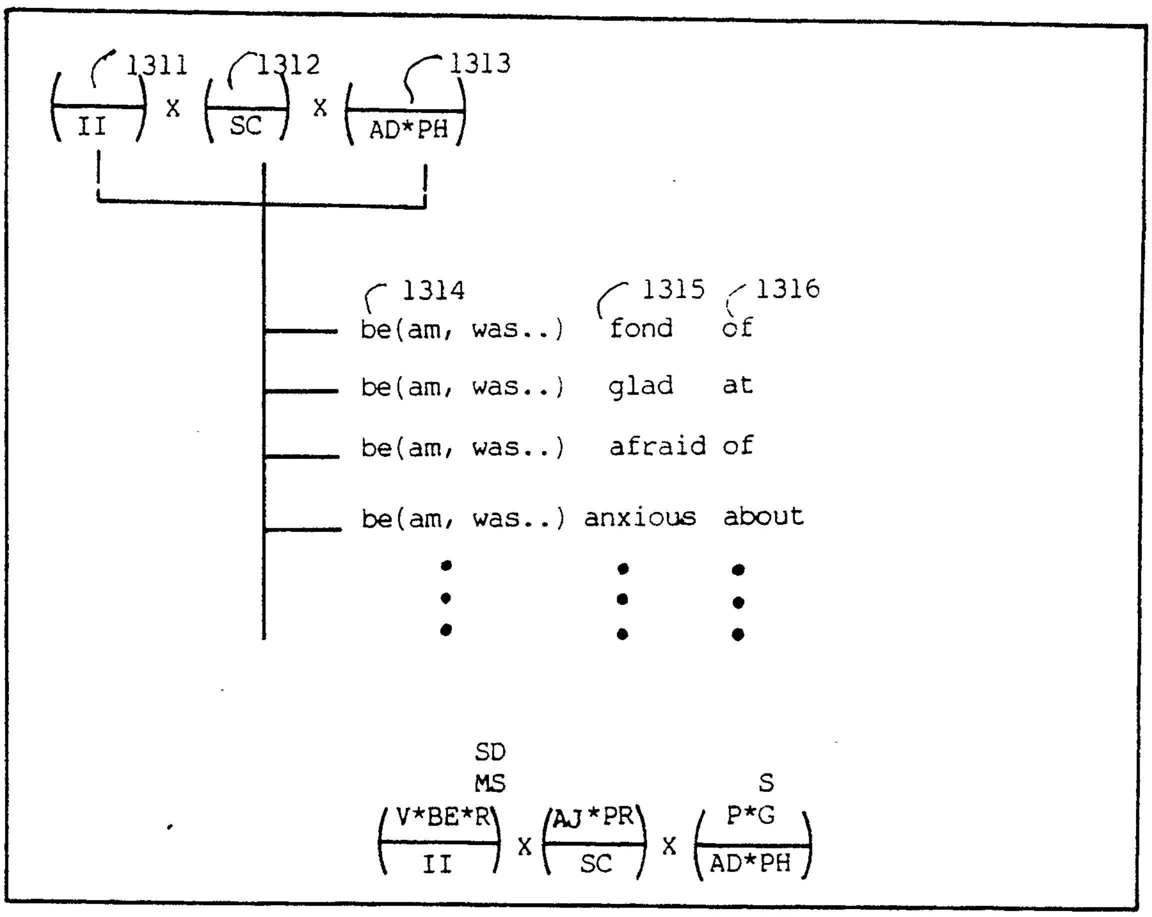
1311
1312
1313
II
SC
AD*PH
1314
1315
1316
be(am, was..) fond of
be(am, was..) glad at
be(am, was..) afraid of
be(am, was..) anxious about
SD
MS
S
V*BE*R
II
AJ*PR
SC
P*G
AD*PH

FIG.14

| | MEMORY UNIT RECEIVING COMPUTED ANALYSIS VALUES |
|---|---|
| A | (P*N)*(S*V)*(M*S)*(T*V)*(V*F)*(S*F)*(SS*VA)*(CL*F)*(PH*F)*(U*M)<br>N*PH S MV*NG*AV CT FV N*PH |
| B | (P*N)*(S*V)*(M*S)*(T*V)*(V*F)*(S*F)*(SS*VA)*(CL*F)*(PH*F)*(U*M)<br>MV*NG*AV CT |
| C | (P*N)*(S*V)*(M*S)*(T*V)*(V*F)*(S*F)*(SS*VA)*(CL*F)*(PH*F)*(U*M)<br>MV*NG*AV CT O FV<br>1401' |
| D | (P*N)*(S*V)*(M*S)*(T*V)*(V*F)*(S*F)*(SS*VA)*(CL*F)*(PH*F)*(U*M)<br>MV*NG*AV DV O FV<br>1402 |

FIG.15

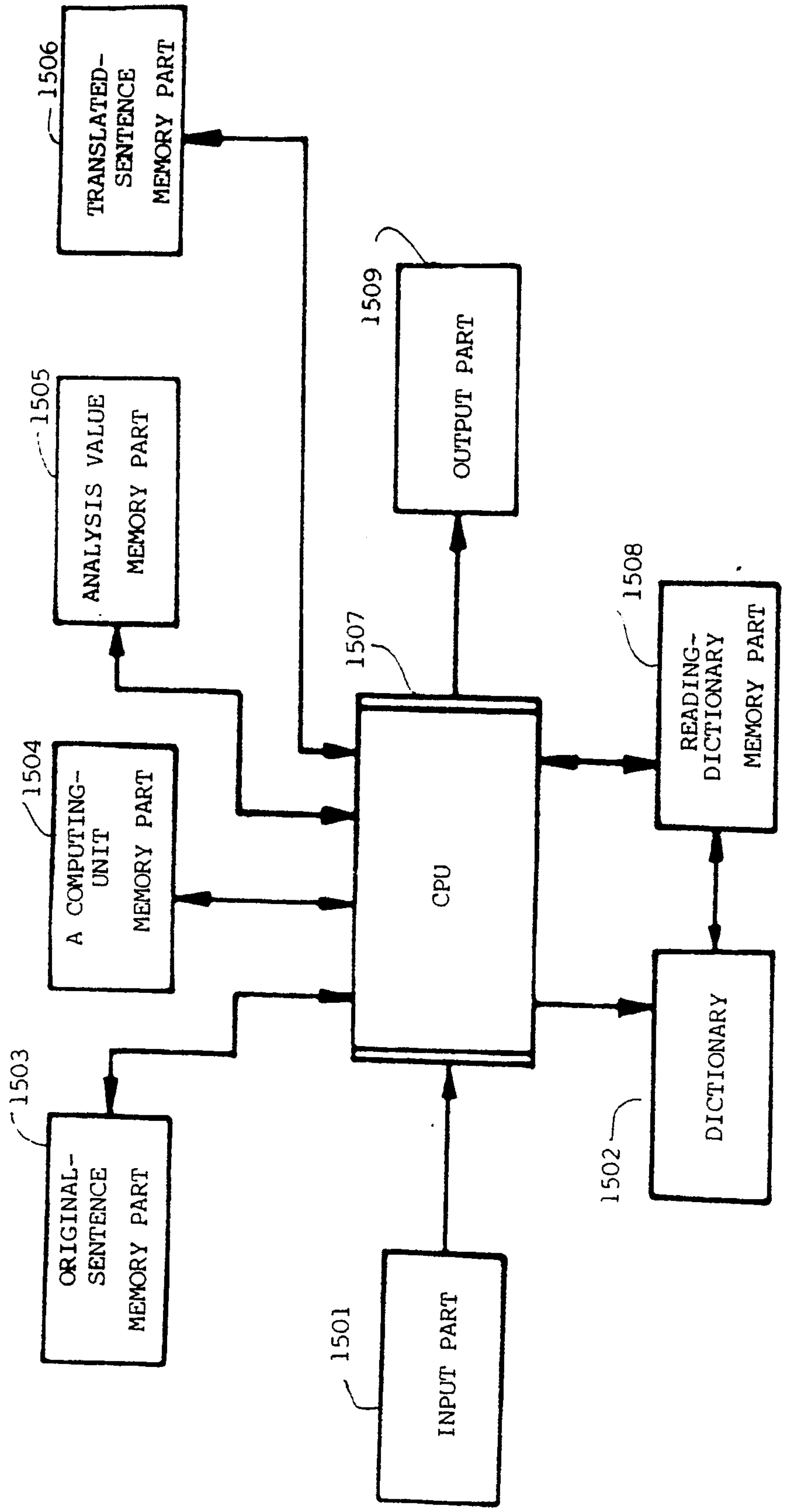
1501
INPUT PART
1502
DICTIONARY
1503
ORIGINAL-SENTENCE MEMORY PART
1504
A COMPUTING-UNIT MEMORY PART
1505
ANALYSIS VALUE MEMORY PART
1506
TRANSLATED-SENTENCE MEMORY PART
1507
CPU
1508
READING-DICTIONARY MEMORY PART
1509
OUTPUT PART

FIG.16

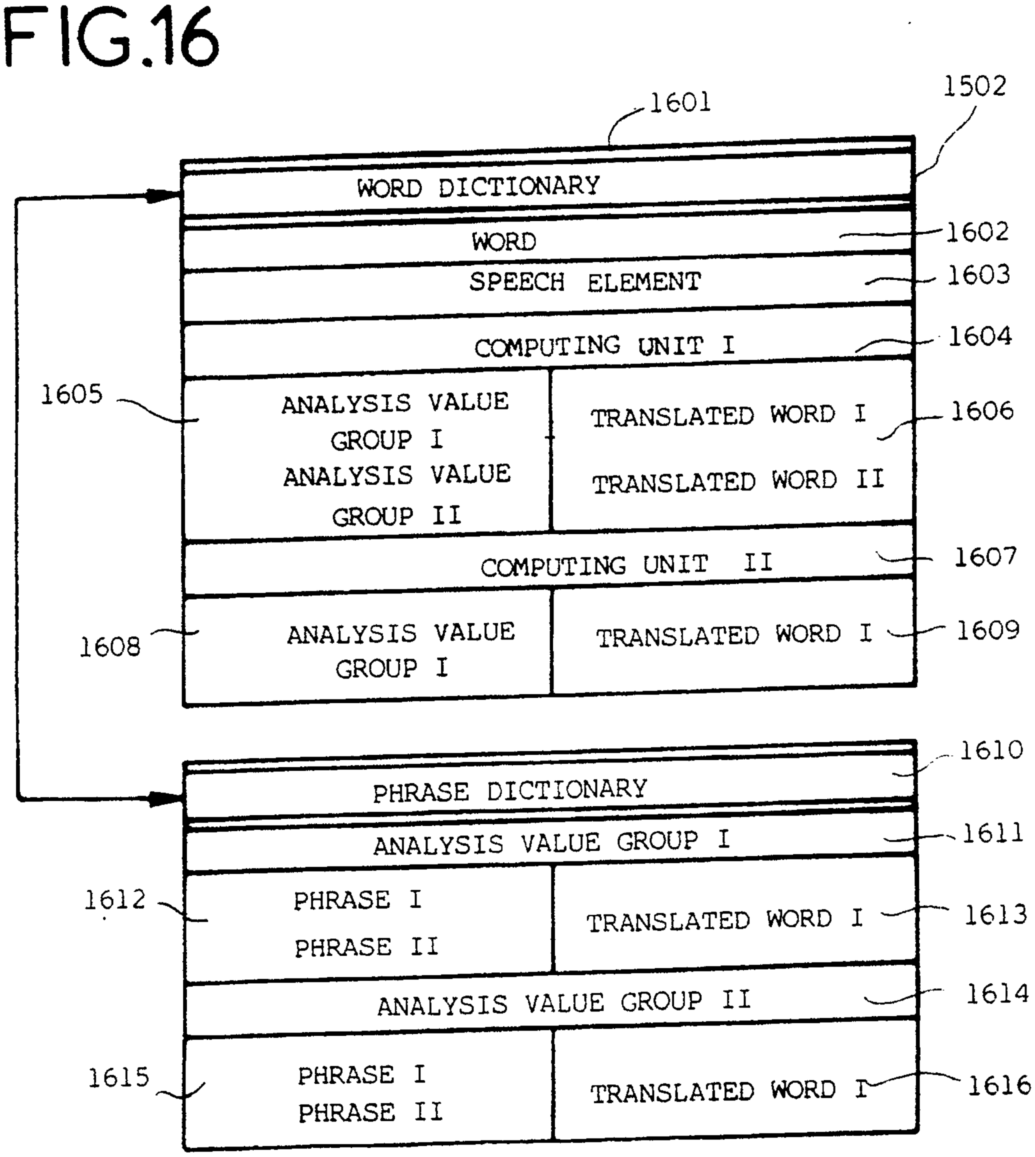
1601
1502
WORD DICTIONARY
WORD
1602
SPEECH ELEMENT
1603
COMPUTING UNIT I
1604
1605
ANALYSIS VALUE GROUP I
ANALYSIS VALUE GROUP II
TRANSLATED WORD I
TRANSLATED WORD II
1606
COMPUTING UNIT II
1607
1608
ANALYSIS VALUE GROUP I
TRANSLATED WORD I
1609
PHRASE DICTIONARY
1610
ANALYSIS VALUE GROUP I
1611
1612
PHRASE I
PHRASE II
TRANSLATED WORD I
1613
ANALYSIS VALUE GROUP II
1614
1615
PHRASE I
PHRASE II
TRANSLATED WORD I
1616

# FIG.17A

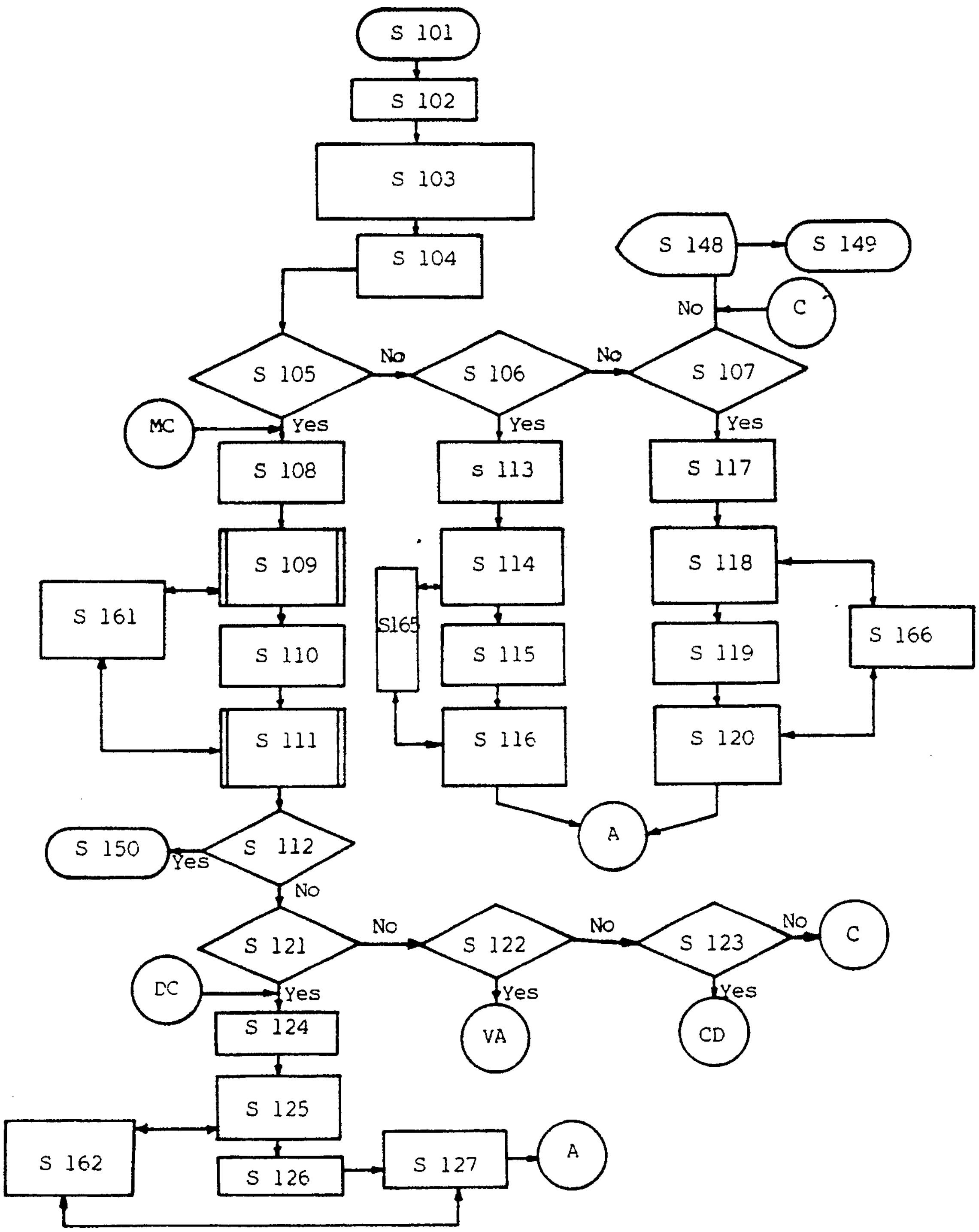
S 101
S 102
S 103
S 104
S 148
S 149
No
C
S 105
No
S 106
No
S 107
MC
Yes
Yes
Yes
S 108
s 113
S 117
S 109
S 114
S 118
S 161
S165
S 166
S 110
S 115
S 119
S 111
S 116
S 120
A
S 150
S 112
Yes
No
S 121
No
S 122
No
S 123
No
C
DC
Yes
Yes
Yes
S 124
VA
CD
S 125
S 162
S 126
S 127
A

# FIG.17B

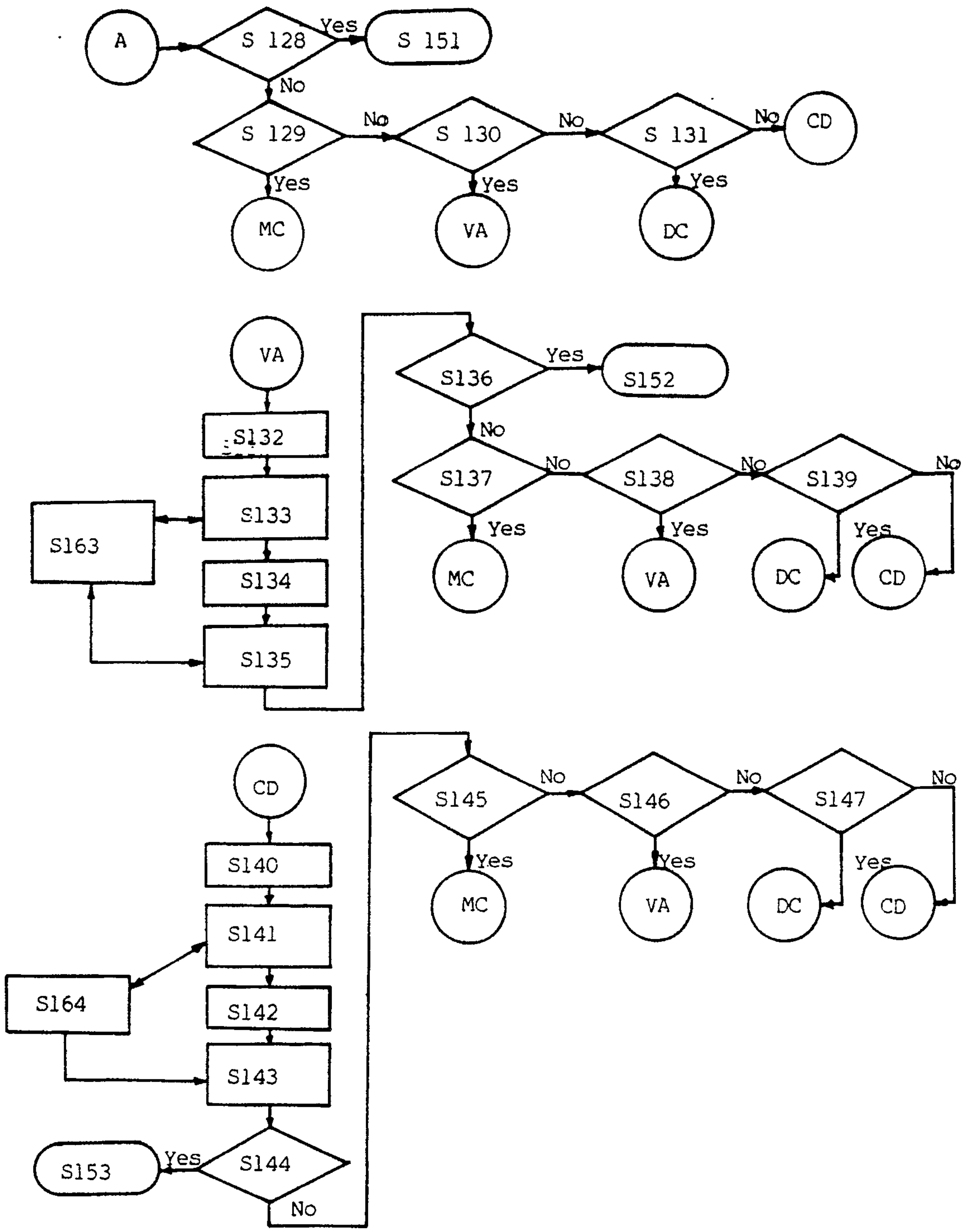
A
S 128
Yes
S 151
No
S 129
No
S 130
No
S 131
No
CD
Yes
MC
Yes
VA
Yes
DC
VA
S132
S133
S163
S134
S135
S136
Yes
S152
No
S137
No
S138
No
S139
No
Yes
MC
Yes
VA
Yes
DC
CD
CD
S140
S141
S164
S142
S143
S153
Yes
S144
No
S145
No
S146
No
S147
No
Yes
MC
Yes
VA
Yes
DC
CD

FIG.18

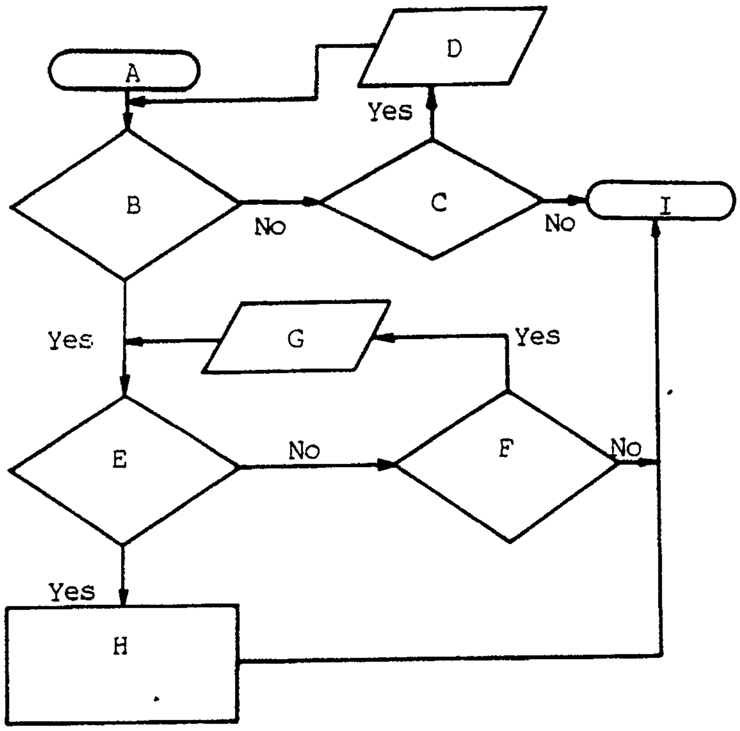
A
D
Yes
B
No
C
No
I
Yes
G
Yes
E
No
F
No
Yes
H

FIG.19

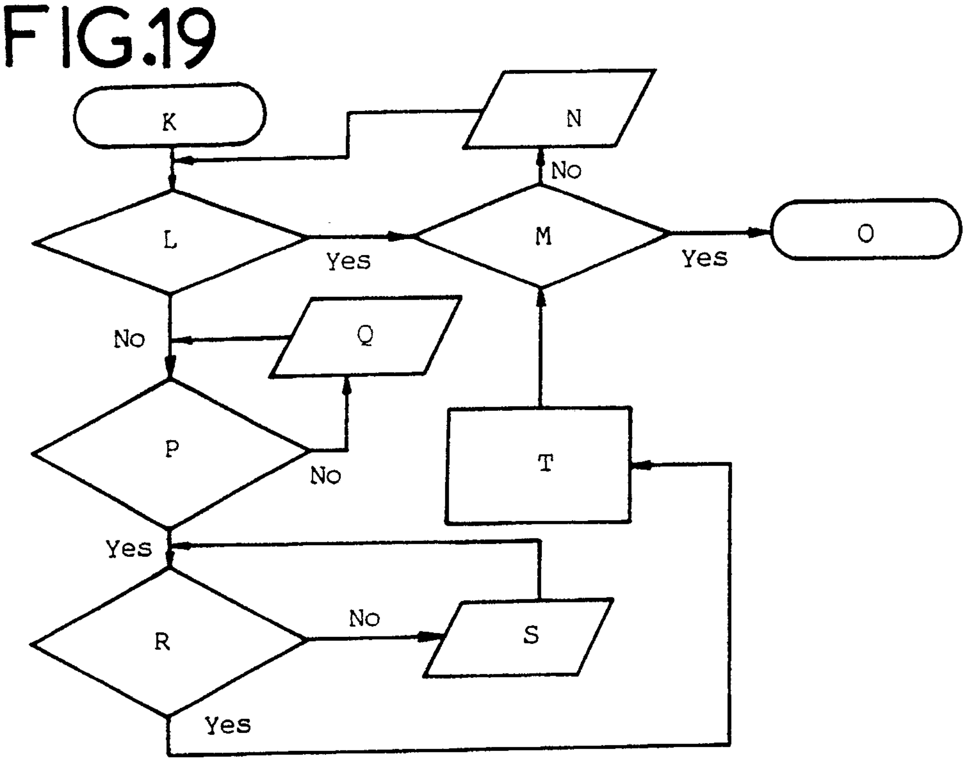
K
N
No
L
Yes
M
Yes
O
No
Q
P
No
T
Yes
R
No
S
Yes

# FIG. 20A

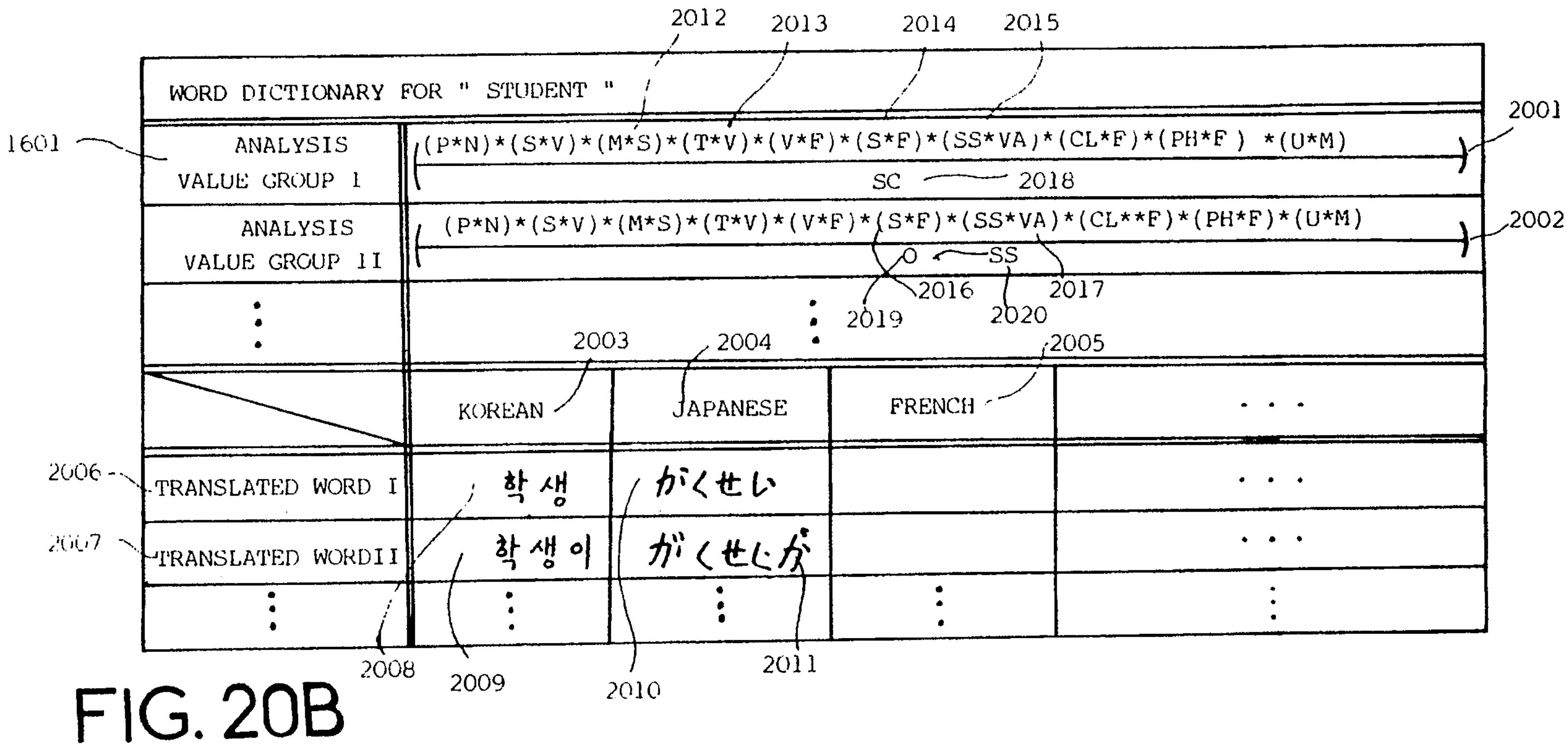


# FIG. 20B

(a) My son who is a smart student will be a Newton.

(a)' 똑똑한 학생 인 내 아들은 뉴톤 같은 사람이 될 것입니다.

(b) Watermelon which is a fresh fruit is good for the student to eat.

(b)' 신선한 과일 인 수박은 학생이 먹기에 좋다.

# FIG.20C

1605

| ANALYSIS VALUE MEMORY PART | |
|---|---|
| CORRESPONDING WORD | ANALYSIS VALUE GROUP |
| 'STUDENT' IN ORIGINAL SENTENCE (a) | (P*N)*(S*V)*(M*S)*(T*V)*(V*F)*(S*F)*(SS*VA)*(CL*F)*(PH*F)*(U*M) 2023 SC |
| 'STUDENT' IN ORIGINAL SENTENCE (b) | (P*N)*(S*V)*(M*S)*(T*V)*(V*F)*(S*F)*(SS*VA)*(CL*F)*(PH*F)*(U*M) O SS |

2026 2021 2022 2024 2027 2025 2028